# EUROPEAN PATENT SPECIFICATION

(11) **EP 4 288 478 B1**
(45) Date of publication and mention of the grant of the patent: **26.03.2025**
(21) Application number: 22709218.6
(22) Date of filing: 08.02.2022
(51) Int. Cl.: C08G 59/62, C08G 59/68

(54) **CURABLE EPOXY SYSTEMS COMPRISING A PHENOLIC POLYMER**
HÄRTBARE EPOXIDSYSTEME MIT EINEM PHENOLISCHEN POLYMER
SYSTÈMES ÉPOXY DURCISSABLES COMPRENANT UN POLYMÈRE PHÉNOLIQUE

(30) Priority: 08.02.2021 EP 21155833
(43) Date of publication of application: 13.12.2023
(73) Proprietor: Rain Carbon Germany GmbH, 44579 Castrop-Rauxel (DE)
(72) Inventor: LIU, Jun, 40878 Ratingen (DE); RAUSER, Marian, 47441 Moers (DE)
(74) Representative: Cohausz & Florack
(86) International application number: PCT/EP2022/053016
(87) International publication number: WO 2022/167686

(56) References cited:
- EP-A2- 0 506 080
- EP-A2- 0 590 463
- US-A1- 2011 224 345
- US-A1- 2016 222 204
- US-B1- 6 255 365

## Description

### TECHNICAL FIELD

The invention relates to an epoxy system comprising an epoxy resin and a phenolic polymer. The invention also relates to the use of the phenolic polymer as accelerator or as hardener for epoxy resins, for example in coating and adhesive systems.

### BACKGROUND OF THE INVENTION

Epoxy resins constitute a broad class of polymers having good adhesion and electrical properties, high glass transition temperatures, excellent resistance to corrosion and solvents and are well-known for their use in adhesives, coatings and composites. Those resins are characterized by epoxide groups which are cured via a crosslinking reaction with a multifunctional nucleophilic curing agent, such as amines, or a reaction with itself. This curing process is in general accelerated or even induced by a Lewis acidic or basic catalyst. Commonly known accelerators for epoxy/amine systems include for example alkylated phenols, particularly bisphenol A, nonylphenol or styrenated phenols, the combination of those alkylated phenols with tertiary amines, salicylic acid or benzyl alcohol. Examples of commercially available accelerators that are frequently applied include Novares^{®} LS500, Sanko MSP, or Kumnox 3111. Despite a high efficiency and an inexpensive availability all those systems are confronted by different applicational or processing issues. For example, bisphenol-A shows allergenic as well as teratogenic properties and exhibits a high crystallization tendency in formulated systems resulting in a performance decrease. Nonylphenol acts as an endocrine disruptor limiting its application possibilities, meanwhile styrenated phenols and salicylic acid are currently under comparable considerations. The benzyl alcohol as volatile substance causes migration effects and declines the glass transition temperature of the cured epoxy resin, which is a critical property for many applications.

EP 0 126 625 A2 describes a phenolic product prepared by reacting a phenol compound substituted with OH, C1-8 alkyl or alkenyl or a phenyl group, a -C(CH₃)₂C₆H₅ group or a -C(CH₃)₂C₆H₄OH group with a benzene compound substituted with two independent occurrences of -C(CH₃)CH₂ or -C(CH₃)₂OH in the presence of an acidic catalyst.

US 9 074 041 B2 describes a curable epoxy resin composite formulation for preparing a composite shaped article comprising a reinforcing material and an epoxy resin composition comprising at least one epoxy resin having an average of more than one glycidyl ether group per molecule, at least one alkanolamine curing agent and at least one styrenated phenol.

US 9 464 037 describes an adduct of styrenated phenols and hydroxylamines as well as a method of its synthesis. The resin is prepared via an acid catalyzed alkylation reaction. US 2016/222204 A1 describes a resin composition comprising an epoxy resin, a benzoxazine resin as hardener, a dicyclopentadiene phenol resin as hardener, and an amine hardener, wherein the resin composition is free of diallyl bisphenol A (DABPA).

EP 0 590 463 A2 teaches an epoxy resin composition excellent in heat resistance and low in dielectric and a copper-clad laminate obtained by molding it, wherein the epoxy resin composition comprises (A) a compound obtainable by reacting an epoxy resin obtainable by glycidyl etherifying a 3-methyl-6-(C4-C8)alkylphenol novolak with a halogen-containing bisphenol compound and (B) an epoxy hardener. US 2011/224345 A1 concerns a resin varnish composition with low dielectric constant, high thermal stability, low moisture absorption and superior fire retardance, used for laminates and circuit boards, comprising a cyclopentadiene-phenolic resin, epoxy resin, or dicyclopentadiene-dihydrobenzoxazine resin, or hybrids thereof, as well as a flame-retardant agent, curing agent, or accelerator, and solvent.

EP 0 506 080 A2 describes an epoxy resin hardener comprising a synthetic resin obtained by the addition reaction of an aromatic hydrocarbon containing a phenolic hydroxyl group with a compound having at least two ethylenically unsaturated double bonds, as well as an epoxy resin composition comprising an epoxy resin and a hardener.

US 6 255 365 B1 relates to an epoxy resin composition for semiconductor encapsulation, which cures rapidly, has excellent molding fluidity, and results in a cured product exhibiting minimal moisture absorption and excellent solder crack resistance. The epoxy resin composition comprises a blend of an epoxy resin and a phenolic resin as hardener, as well as an organic filler and a curing accelerator.

### SUMMARY OF THE INVENTION

The object of the invention is regarded in the provision of an accelerator for epoxy resins that does not have the disadvantages shown above. In particular, a nonvolatile, non-toxic polymeric accelerator system for curing of epoxy resins with comparable or improved acceleration properties like the prior art accelerators would be desirable.

This object is solved with an epoxy system comprising
an epoxy resin and
a phenolic polymer having a number average molar mass (Mn) of from 200 to 1,500 g/mol comprising a phenol compound, a linker group L and end group E, said phenolic polymer having the structure as presented in formula 1 below: 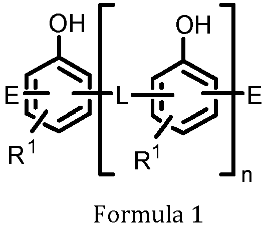
wherein the linker group L has the meaning of 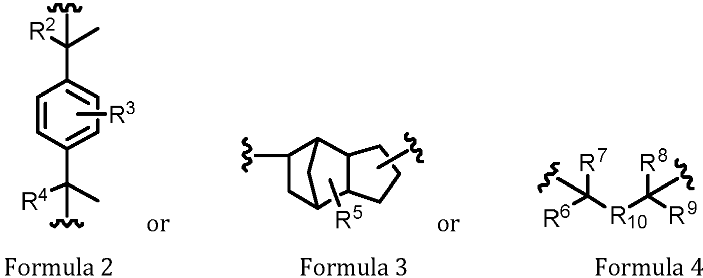 or 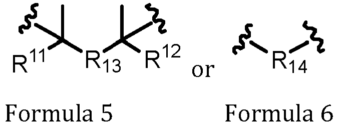
each end group E is a group of formula 2, 3, 4, 5 or 6 with only one bond to a phenol compound in formula 1 or has the meaning of 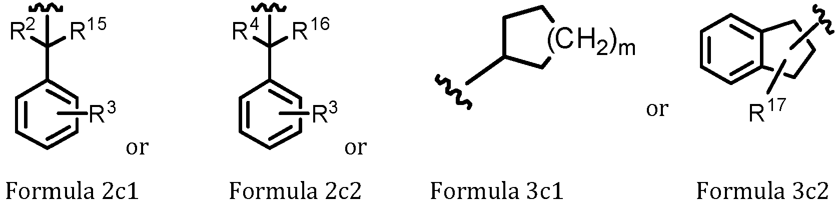
and wherein
R¹ is H, C₁₋₁₅ alkyl, or C₁₋₁₅ oxyalkyl,
R², R⁴, R⁶, R⁷, R⁸, R⁹, R¹¹ and R¹² are independently from each other H or C₁₋₅ alkyl,
R³ and R⁵ are H, OH, NO₂, halogen, C₁₋₅ alkyl or C₁₋₅ oxyalkyl,
R₁₀ and R₁₃ are C₁₋₅ alkyl or C₅₋₆ cycloalkyl,
R₁₄ is C₅₋₁₂ cycloalkyl, optionally substituted with a methyl or an ethyl group,
R¹⁵, R¹⁶, and R¹⁷ are independently from each other H or C₁₋₅ alkyl, preferably -CH₃,
m is an integer from 1 to 7 and
n is an integer of from 2 to 21.

The invention is furthermore directed to the use of a phenolic polymer having a number average molar mass (Mₙ) of from 200 to 1,500 g/mol comprising a phenol compound, a linker group L and end group E, said phenolic polymer having the structure as presented in formula 1 below: 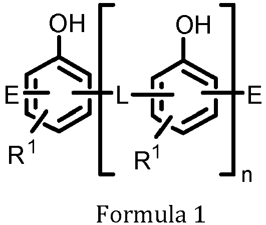 wherein the linker group L has the meaning of 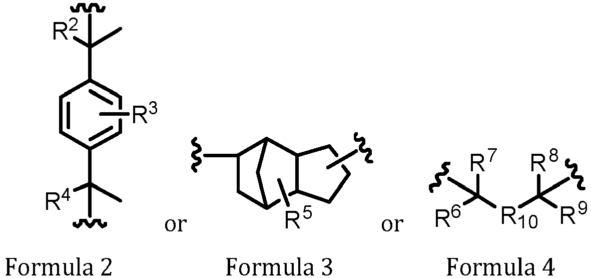 or 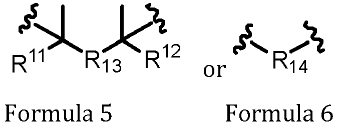 each end group E is a group of formula 2, 3, 4, 5 or 6 with only one bond to a phenol compound in formula 1 or has the meaning of 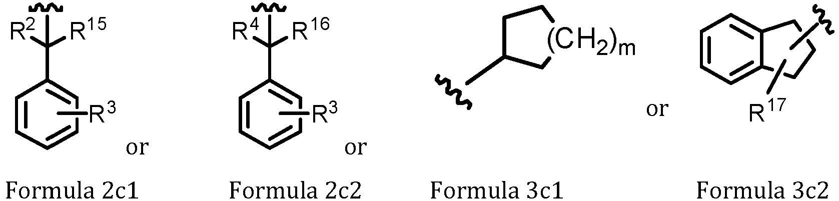 and wherein
R¹ is H, C₁₋₁₅ alkyl, or C₁₋₁₅ oxyalkyl,
R², R⁴, R⁶, R⁷, R⁸, R⁹, R¹¹ and R¹² are independently from each other H or C₁₋₅ alkyl,
R³ and R⁵ are H, OH, NO₂, halogen, C₁₋₅ alkyl or C₁₋₅ oxyalkyl,
R₁₀ and R₁₃ are C₁₋₅ alkyl or C₅₋₆ cycloalkyl,
R₁₄ is C₅₋₁₂ cycloalkyl, optionally substituted with a methyl or an ethyl group,
R¹⁵, R¹⁶, and R¹⁷ are independently from each other H or C₁₋₅ alkyl, preferably -CH₃,
m is an integer from 1 to 7 and
n is an integer of from 2 to 21
as an accelerator for the curing of epoxy resins, in particular in the presence of a hardener comprising amine functionalities
   or
as a hardener for epoxy resins, in particular in the presence of a co-hardener comprising amine functionalities.

The invention is furthermore directed to a kit of parts comprising
an epoxy resin and
a phenolic polymer having a number average molar mass (Mₙ) of from 200 to 1,500 g/mol comprising a phenol compound, a linker group L and end group E, said phenolic polymer having the structure as presented in formula 1 below: 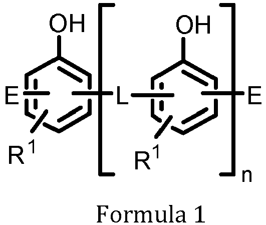 wherein the linker group L has the meaning of 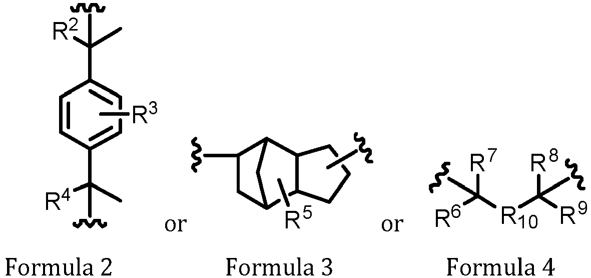 or 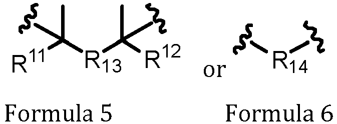
each end group E is a group of formula 2, 3, 4, 5 or 6 with only one bond to a phenol compound in formula 1 or has the meaning of 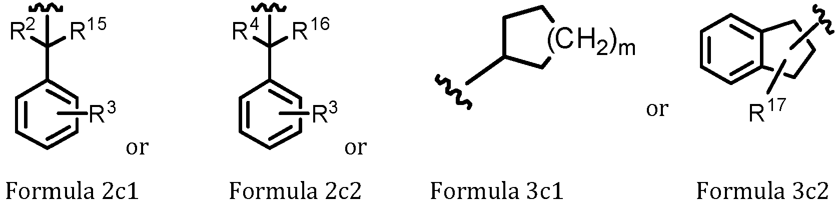
and wherein
R¹ is H, C₁₋₁₅ alkyl, or C₁₋₁₅ oxyalkyl,
R², R⁴, R⁶, R⁷, R⁸, R⁹, R¹¹ and R¹² are independently from each other H or C₁₋₅ alkyl,
R³ and R⁵ are H, OH, NO₂, halogen, C₁₋₅ alkyl or C₁₋₅ oxyalkyl,
R₁₀ and R₁₃ are C₁₋₅ alkyl or C₅₋₆ cycloalkyl,
R₁₄ is C₅₋₁₂ cycloalkyl, optionally substituted with a methyl or an ethyl group,
R¹⁵, R¹⁶, and R¹⁷ are independently from each other H or C₁₋₅ alkyl, preferably -CH₃,
m is an integer from 1 to 7 and
n is an integer of from 2 to 21, and
a hardener comprising amine, anhydride, phenolic, and/or thiol, in particular amine, functionalities.

The phenolic polymer according to the invention accelerates the curing of epoxy resins, for example in adhesive systems or in coatings. The hardened epoxy resins have good mechanical properties and also good chemical resistivity.

It was further found that using the phenolic polymer according to the invention in epoxy systems or kit-of-parts according to the invention or as an accelerator may provide controlled acceleration properties in epoxy resins. At the same time, the phenolic polymer according to the invention may not result in the reduction of the mechanical strength of epoxy systems. Moreover, it was found that epoxy resins or epoxy systems comprising the phenolic polymer according to the invention may have a high mechanical resistance. Further, epoxy resins or epoxy systems comprising the phenolic polymer according to the invention may have a high chemical resistance. Epoxy resins or epoxy systems, in particular cured epoxy systems, comprising the phenolic polymer according to the invention may also have a high glass transition temperature (T_{g}). Epoxy resins or epoxy systems, in particular cured epoxy systems, comprising the phenolic polymer according to the invention may also have a high thermal stability. Lastly, epoxy resins or epoxy systems, in particular cured epoxy systems, comprising the phenolic polymer according to the invention may have an improved adhesion to metal and mineral surfaces and/or a higher corrosion resistance.

### PREFERRED EMBODIMENTS OF THE INVENTION

The phenolic polymer according to the invention may also be referred to as a terpolymer.

In the following, the components in the phenolic polymer and its properties are first described further.

According to a preferred embodiment of the invention, R¹ is H, C₁₋₁₀ alkyl, in particular C₁₋₈ alkyl, more particularly C₁₋₅ alkyl, or C₁₋₁₀ oxyalkyl, in particular C₁₋₈ oxyalkyl, more particularly C₁₋₅ oxyalkyl.

According to a preferred embodiment, the phenolic polymer has the structure as presented in formula 1 below: 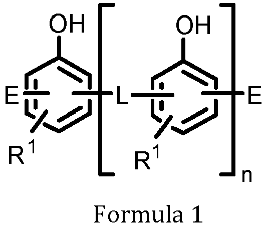 wherein the linker group L has the meaning of 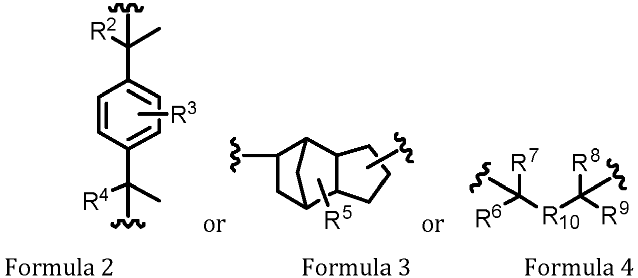 or 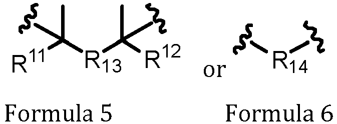
each end group E is a group of formula 2, 3, 4, 5 or 6 with only one bond to a phenol compound in formula 1, and wherein
R¹ is H, C₁₋₅ alkyl, or C₁₋₅ oxyalkyl,
R², R⁴, R⁶, R⁷, R⁸, R⁹, R¹¹ and R¹² are independently from each other H or C₁₋₅ alkyl,
R³ and R⁵ are H, OH, NO₂, halogen, C₁₋₅ alkyl or C₁₋₅ oxyalkyl,
R₁₀ and R₁₃ are C₁₋₅ alkyl or C₅₋₆ cycloalkyl,
R₁₄ is C₅₋₁₂ cycloalkyl, optionally substituted with a methyl or an ethyl group, and
n is an integer of from 2 to 21.

According to a preferred embodiment, the linker group L has the meaning of 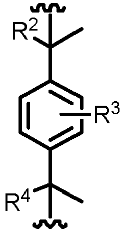 Formula 2,
wherein R², R³, and R⁴ are as defined herein for formula 2, in particular are H. It was found that phenolic polymers, in which the linker group L has the aforementioned meaning, in particular when R², R³, and R⁴ are H, have good properties. In particular, phenolic polymers with lower softening points can be achieved. With lower softening points, the processability and/or compatibility with other compounds such as epoxide resins may be improved.

The phenolic polymer can be prepared by polymerizing a phenol compound with one of the monomers of formulae 2a to 5a or a substituted or non-substituted C₅₋₁₂ cycloolefinic compound having at least two double bonds in a series of Friedel Crafts alkylation reactions. Alternatively to the monomers of formulae 2a to 5a, a monomer of formula 2b may be employed. The reaction is performed according to the known synthesis method of a Friedel Crafts alkylation reaction. The structure of the monomers according to formulae 2a to 5a or C₅₋₁₂ cycloolefinic compound, which act as the linker L in the polymerization reaction, is selected as follows: 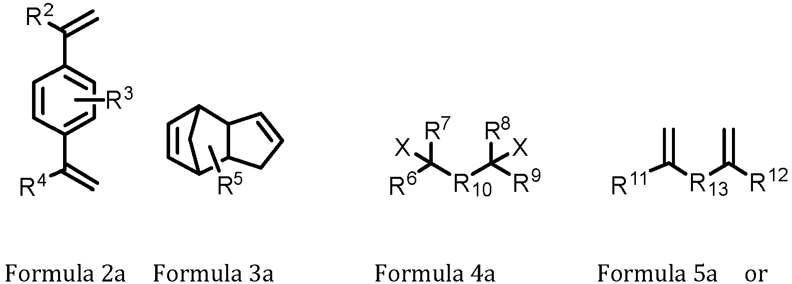
a C₅₋₁₂ cycloolefinic compound that is optionally substituted with a methyl or an ethyl group and preferably comprises two non-conjugated double bonds,
wherein R² to R¹³ have the meaning as explained before with view to the residues of formulae 2, 3, 4, and 5, and
X is a hydroxyl group or a halogen selected of chlorine, bromine and iodine.

The structure of formula 2b is as follows 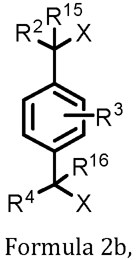 wherein R², R³, and R⁴ are as explained before with view to the residues of formula 2, R¹⁵ and R¹⁶ are independently from each other H or C₁₋₅ alkyl and X is a hydroxyl group or a halogen selected of chlorine, bromine and iodine. Preferably, the residues R², R⁴, R¹⁵ and R¹⁶ have the meaning of H and/or alkyl having 1 to 2 carbon atoms. In a particular preferred embodiment, the residues R², R⁴ have the meaning of H and the residues R¹⁵ and R¹⁶ have the meaning of -CH₃. Most preferably, the residues R¹⁵ and R¹⁶ have the meaning of -CH₃.

According to a preferred embodiment of the invention the residues R², R⁴, R⁶, R⁷, R⁸, R⁹, R¹¹ and R¹² of the phenolic polymer of formula 1 and accordingly in the monomers according to formulae 2a, 3a, 4a and 5a have the meaning of H and/or alkyl having 1 to 2 carbon atoms. In a particular preferred embodiment, the residues R², R⁴, R⁶, R⁷, R⁸, R⁹, R¹¹ and R¹² have the meaning of H.

Formulae 2a, 2b, 3a, 4a, 5a or the optionally methyl or ethyl substituted C₅₋₁₂ cycloolefinic compound as shown above represent the starting compounds for the polymerization of the phenolic polymer whereas the groups of formulae 2, 3, 4, 5, and 6 represent the corresponding resulting units L after polymerization in the phenolic polymer.

The starting compounds of formulae 2a, 3a, 4a, 5a and the optionally methyl or ethyl substituted C₅₋₁₂ cycloolefinic compound can be used as purified substances, but can also be used in a way, where the specific starting compound is part of a compound mixture. In particular, this can be the case if divinylbenzene is used as a starting compound in the polymerization of the phenolic polymer. In case of employing such a compound mixture the starting compound, in particular the starting monomer for the linker group L, should be present in the mixture at least in an amount of 50 wt.% to 100 wt.%, preferred 50 wt.% to 80 wt.%, based on the weight of the compounds of the mixture.

The phenol compound, which is subjected to polymerization with the compounds of formulae 2a to 5a and the optionally methyl or ethyl substituted C₅₋₁₂ cycloolefinic compound R¹⁴ to produce a phenolic polymer of formula 1 can be selected from phenol, C₁₋₁₅ alkyl phenol, in particular C₁₋₁₀ alkyl phenol, more particularly C₁₋₈ alkyl phenol, even more particularly C₁₋₅ alkyl phenol, and C₁₋₁₅ oxyalkyl phenol, in particular C₁₋₁₀ oxyalkyl phenol, more particularly C₁₋₈ oxyalkyl phenol, even more particularly C₁₋₅ oxyalkyl phenol, for example, o-cresol, m-cresol, p-cresol, ethyl phenol and isopropyl phenol.

The catalyst for the polymerization can be a Lewis acid or a Broensted acid. Preferably the calalyst is selected from AlCl₃, BF₃, ZnCl₂, H₂SO₄, TiCl₄ or mixtures thereof. The catalyst can be used in an amount of from 0.1 to 1 mol %. After the phenol compound is melted by heating at a temperature of 25 °C to 180 °C, preferably 35 °C to 100 °C, or dissolved in a suitable solvent (e.g. toluene), the catalyst is added. Thereafter, a monomer compound selected of formulae 2a to 5a or the optionally methyl or ethyl substituted C₅₋₁₂ cycloolefinic compound is added dropwise to the phenol compound. Alternatively, the catalyst is added to a mixture of the phenol compound and the monomer compound of formulae 2a to 5a or the optionally methyl or ethyl substituted C₅₋₁₂ cycloolefinic compound. The reaction mixture may be cooled, for example from - 10°C to 10°C, when adding the catalyst. The time period of addition of a compound of formulae 2a, 3a, 4a, or 5a or the optionally methyl or ethyl substituted C₅₋₁₂ cycloolefinic compound can be selected to be 10 minutes to 2 hours. The reaction can be continued for 1.5 to 2.5 hours. The polymerization reaction can be performed at a temperature of from 40 °C to 200 °C, preferably 60 °C to 150 °C. Preferably, the polymerization is performed at ambient pressure. The polymerization can be quenched by the addition of suitable additives, preferably lime. The obtained polymers can be purified by filtration and/or steam distillation.

The molar mass (Mn) of the phenolic polymer is in the range of from 200 to 1,500 g/mol, preferably in the range of from 350 or 400 to 800 g/mol.

The phenolic polymer preferably has a mass average molecular mass (Mw) of 500 to 12,000 g/mol, more preferably from 600 to 10,000 g/mol, even more preferably from 700 to 9000 g/mol.

The phenolic polymer preferably has a z-average molecular mass (Mz) of 800 to 35,000 g/mol, more preferably from 900 to 25,000 g/mol, even more preferably from 1,000 to 20,000 g/mol.

The number average molecular mass (Mn), the mass average molecular mass (Mw), and the z-average molecular mass (Mz) may in particular be determined using gel permeation chromatography (GPC). In GPC, styrene-divinylbenzene copolymers may be used as column material. A 3 µm precolumn and three 3 µm 1000 Å main columns may be used. A SECcurity²-System by PSS-Polymers may be used. The substances may be detected with an RI detector. Unstabilized ULC/MS-grade THF is preferably used as eluent. The measurements are preferably run isothermal at 40°C. For the calibration curve, ReadyCal-Kit Poly(styrene) low (Mp 266-66,000 Da) by PSS-Polymer may be used as external standard.

It was found that phenolic polymers with lower molecular weights in the aforementioned ranges exhibited improved properties, in particular improved compatibility and miscibility with epoxy resins. This resulted in accelerated curing and in some cases in improved mechanical properties and/or improved chemical resistivity.

The phenolic polymer advantageously has a glass transition temperature (Tg) of from - 10°C to 90°C, preferably from -10°C to 70 °C, more preferably from -5°C to 50°C, and most preferably from 0°C to 40°C. It was found that phenolic polymers with a glass transition temperature in the aforementioned ranges show good processability and/or good solubility in other compounds such as epoxy resins.

The glass transition temperature is preferably measured using differential scanning calorimetry (DSC). A DSC 2/400 with intra cooler from Mettler Toledo may be employed. For the measurement, aluminum crucibles with pin holes, in particular ME-26763 AL-Crucibles, may be employed. For the evaluation of the glass transition temperature, a heating-cooling-heating-cooling sequence may be employed with a heating / cooling rate of 10 K/min within a measuring window between -40°C to 150°C. The Tg evaluation is preferably performed in accordance to DIN 53765, in particular DIN 53765:1994-03.

The phenolic polymer may comprise 50 wt. % to 70 wt. % of the phenol compound. The phenolic polymer may comprise 20 wt. % to 50 wt. % of the linker group L, in particular of difunctional monomers (linker L) selected from a divinylbenzene compound, a diclyclopentadiene compound or a compound of formula 4, 5 or 6, based on the weight (mass) of the phenolic polymer. The divinylbenzene compound is preferably a compound of formula 2, more preferably a compound of formula 2 wherein R², R³, and R⁴ are as defined herein, most preferably wherein R², R³, and R⁴ are H. The dicyclopentadiene compound is preferably a compound of formula 3. Further, the phenolic polymer may comprise 0 wt. % to 50 wt. %, in particular 5 wt. % to 40 wt. %, more particularly 10 wt. % to 35 wt. %, monofunctional monomers (end group E), based on the weight (mass) of the phenolic polymer. The term monofunctional monomer used before refers to a compound, which can be present in the starting mixture of compounds of formulae 2a, 4a, 5a and the optionally methyl or ethyl substituted C₅₋₁₂ cycloolefinic compound for the polymerization of the phenolic polymer, which however has only one double bond or one halogen capable to react in the polymerization reaction to obtain the phenolic polymer. Such modified starting compound or monofunctional starting compound acts as a chain stopper in the polymerization reaction. It can form the end group E of formula 1. Further examples of end groups E are described below.

According to a preferred embodiment, the end group E may have the meaning of 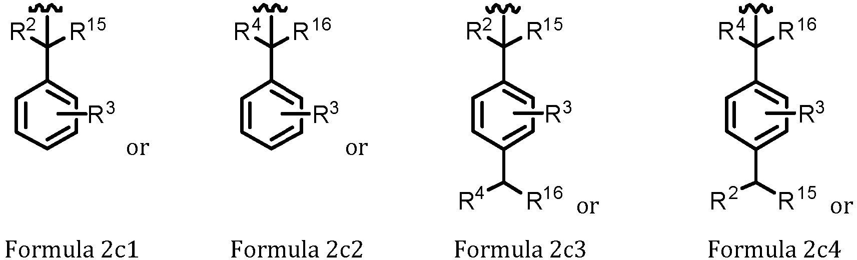 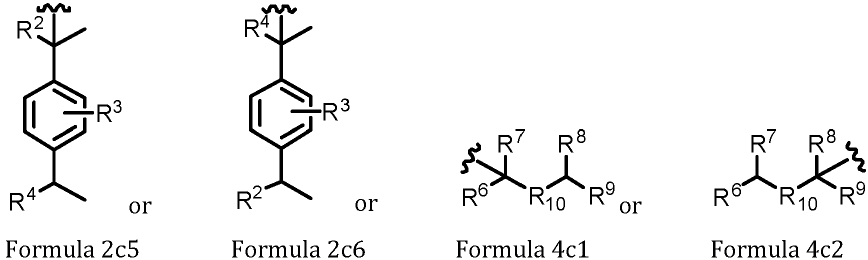 or 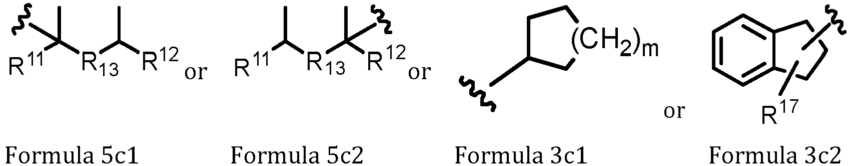
wherein R² to R¹³ have the meaning as explained before with view to the residues of formulae 2, 3, 4, and 5,
m is an integer from 1 to 7 and
R¹⁵, R¹⁶, and R¹⁷ are independently from each other H or C₁₋₅ alkyl, preferably -CH₃.

When using end groups E that are different from H, in particular end groups E with the meaning of the aforementioned formulas, the accelerating properties of the phenolic polymer can be adjusted. It was found that when the aforementioned end groups E were incorporated into the phenolic polymer, the acceleration could be increased. Moreover, the compatibility of the phenolic polymer with other compounds, in particular epoxy resins, could be improved.

The end group E may also have the meaning of a C₅₋₁₂ cycloalkyl group optionally substituted with a methyl group or an ethyl group.

Accordingly, the end group E may advantageously be obtained from monofunctional monomers having the meaning of 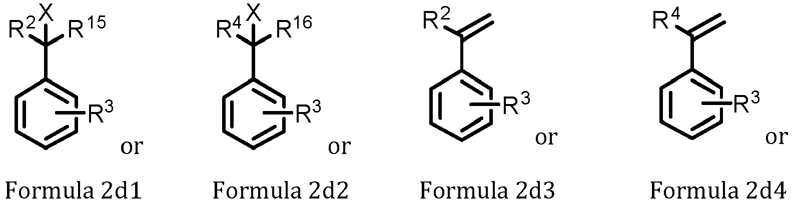 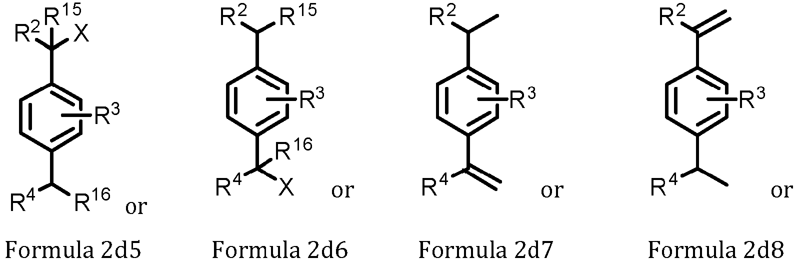 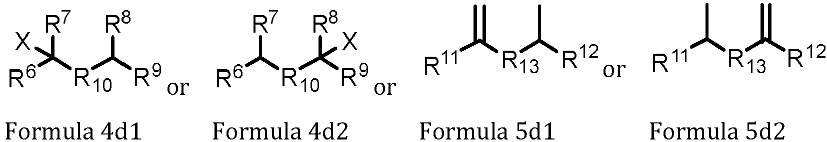 or 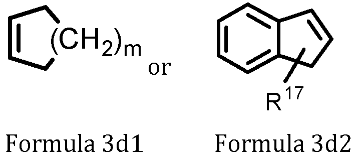
wherein R² to R¹³ have the meaning as explained before with view to the residues of formulae 2, 3, 4, and 5,
R¹⁵, R¹⁶, and R¹⁷ are independently from each other H or C₁₋₅ alkyl
m is an integer from 1 to 7 and
X is a hydroxyl group or a halogen selected of chlorine, bromine and iodine.

The end group E may also be obtained from a monomer having the meaning of a C₅₋₁₂ cycloolefinic compound with only one double bond optionally substituted with a methyl group or an ethyl group.

According to an embodiment, the end group E has the meaning of 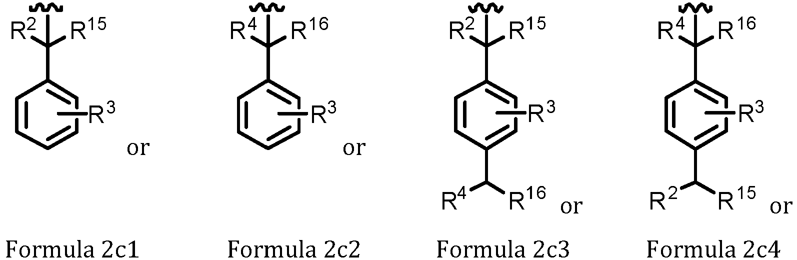 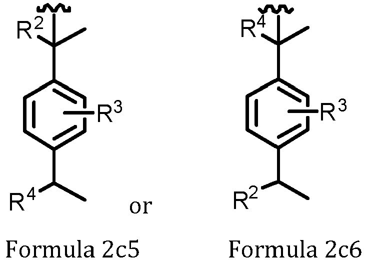 wherein R², R³, R⁴, R¹⁵, and R¹⁶ are independently from each other H or C₁₋₅ alkyl, preferably wherein independently from each other R³ is H, R² is H or CH₃, R⁴ is H or CH₃, R¹⁵ is C₁₋₅ alkyl, and R¹⁶ is C₁₋₅ alkyl.

According to a preferred embodiment, the end group E has the meaning of 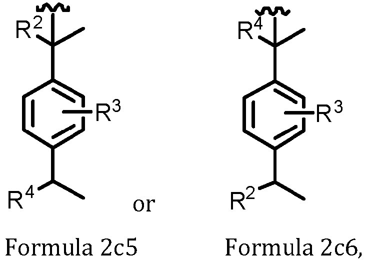 wherein R², R³, and R⁴ are independently from each other H or C₁₋₅ alkyl, preferably H.

According to a preferred embodiment, the linker group L has the meaning of 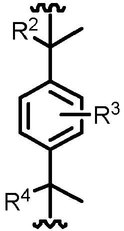 Formula 2,
and the end group E has the meaning of 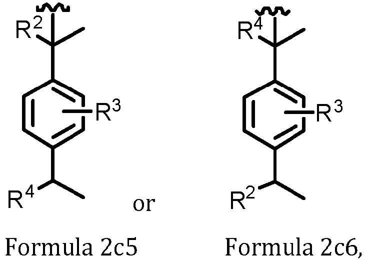
wherein R², R³, and R⁴ are independently from each other H or C₁₋₅ alkyl, preferably H.

The phenolic polymer may have a high OH content, preferably of 5 to 13 wt.%, in particular preferred 6 to 9 wt.% based on the weight of the phenolic polymer. The phenolic polymer preferably has a softening point according to ASTM 3461 up to 170 °C, more preferred 40 °C to 120 °C, most preferred 50 °C to 100 °C.

Further properties of the epoxy system according to the invention are described below.

The epoxy systems may be one part epoxy systems or two part epoxy systems. In one part epoxy systems, the epoxy resin, the hardener, the accelerator and other components are in particular part of the same mixture. In one part epoxy systems the hardeners are latent reactive at ambient temperature and become active at high temperature. In one part epoxy systems, the hardener preferably comprises anhydride, thiol and/or phenol functionalities. Examples of latent hardeners are dicynamide, BF₃ complexes such as BF₃ monoethylamine complex, aromatic amines, and imidazoles such as 2-ethyl-4-methyl imidazole. However, also hardeners comprising carboxylic acid and/or isocyanate functionalities can be used in one part systems. Accelerators or optional additional accelerators in one part epoxy systems can in particular be amines which reveal catalytic activity at curing temperature. In two part epoxy systems, the epoxy resin and the hardener are separate. The epoxy resin and the hardener are combined to effect cross-linking of the epoxy resin and the hardener. The hardeners in two part epoxy systems are preferably amines or their derivates. Accelerators in two part epoxy systems may in particular be incorporated into the hardener part. Accelerators or optional additional accelerators in two part epoxy systems may in particular be compounds containing functionalities of amine, phenol, alcohol, thiol or carboxylic acid. In the one part or the two part epoxy systems, the epoxy resin may be present cross-linked with the hardener.

The epoxy system may in particular also comprise a hardener comprising amine, anhydride, phenolic, and/or thiol, in particular amine, functionalities. If the phenolic polymer according to the invention is used as an accelerator, the epoxy system preferably contains a hardener. If the phenolic polymer according to the invention is used as a hardener, the epoxy system may contain the hardener comprising amine, anhydride, phenolic, and/or thiol, in particular amine, functionalities as a co-hardener. In the epoxy systems, the epoxy resin may be present cross-linked with the hardener.

Examples of hardeners or co-hardeners comprising amine functionalities may be selected from, for example, but are not limited to, aliphatic amines, dicyandiamide, substituted guanidines, phenolic, amino, benzoxazine, anhydrides, amido amines, polyamides, polyamines, carbodiimides, urea formaldehyde and melamine formaldehyde resins, ethanolamine, ethylenediamine, diethylenetriamine (DETA), triethyleneaminetetramine (TETA), 1-(o-tolyl)-biguanide, amine-terminated polyols, aromatic amines such as methylenedianiline (MDA), toluenediamine (TDA), diethyltoluenediamine (DETDA), diaminodiphenylsulfone (DADS), and mixtures thereof.

Examples of hardeners or co-hardeners comprising anhydride functionalities are phthalic anhydride, trimellitic anhydride, nadic methyl anhydride (also referred to as methyl-5-norbornene-2,3-dicarboxylic anhydride), methyl tetrahydrophthalic anhydride, methyl hexahydrophthalic anhydride and mixtures thereof.

Examples of hardeners or co-hardeners comprising phenolic functionalities are bisphenol A, bisphenol F, 1,1-bis(4-hydroxyphenyl)-ethane, hydroquinone, resorcinol, catechol, tetrabromobisphenol A, novolacs such as phenol novolac, bisphenol A novolac, hydroquinone novolac, resorcinol novolac, naphthol novolac, and mixtures thereof.

Examples of hardeners or co-hardeners comprising thiol functionalities are aliphatic thiols such as methanedithiol, propanedithiol, cyclohexanedithiol, 2-mercaptoethyl-2,3-dimercaptosuccinate, 2,3-dimercapto-1-propanol(2-mercaptoacetate), diethylene glycol bis(2-mercaptoacetate), 1,2-dimercaptopropyl methyl ether, bis(2-mercaptoethyl) ether, trimethylolpropane tris(thioglycolate), pentaerythritol tetra(mercaptopropionate), pentaerythritol tetra(thioglycolate), ethyleneglycol dithioglycolate, trimethylolpropane tris(β-thiopropionate), tris-mercaptan derivative of tri-glycidyl ether of propoxylated alkane, and dipentaerythritol poly(β-thiopropionate); halogen-substituted derivatives of the aliphatic thiols; aromatic thiols such as di-, tris- or tetra-mercaptobenzene, bis-, tris- or tetra-(mercaptoalkyl)benzene, dimercaptobiphenyl, toluenedithiol and naphthalenedi thiol; halogen-substituted derivatives of the aromatic thiols; heterocyclic ring-containing thiols such as amino-4,6-dithiol-sym-triazine, alkoxy-4,6-dithiol-sym-triazine, aryloxy-4,6-dithiol-sym-triazine and 1,3,5-tris(3-mercaptopropyl) isocyanurate; halogen-substituted derivatives of the heterocyclic ring-containing thiols; thiol compounds having at least two mercapto groups and containing sulfur atoms in addition to the mercapto groups such as bis-, tris- or tetra(mercaptoalkylthio)benzene, bis-, tris- or tetra(mercaptoalkylthio)alkane, bis(mercaptoalkyl) disulfide, hydroxyalkylsulfidebis(mercaptopropionate), hydroxyalkylsulfidebis(mercaptoacetate), mercaptoethyl ether bis(mercaptopropionate),1l,4-dithian-2,5-diolbis(mercaptoacetate), thiodiglycolic acid bis(mercaptoalkyl ester), thiodipropionic acid bis(2-mercaptoalkyl ester), 4,4-thiobutyric acid bis(2-mercaptoalkyl ester), 3,4-thiophenedithiol, bismuththiol and 2,5-dimercapto-1,3,4-thiadiazol, and mixtures thereof.

Exemplary epoxy resins may comprise at least one epoxy resin based on bisphenol A, bisphenol F, novolac, phenol resin, epoxidized natural oils and any polyalcohols. These compounds may also have been reacted with for example epichlorohydrin. Other exemplary epoxy resins are described in US 9 074 041 B2, column 4, lines 24 to 46.

The epoxy resins mentioned herein can be pigmented and filled systems with pigments and/or fillers, for example iron oxides, titanium dioxide, organic pigments, calcium carbonates, talcum, barium sulphonates, silica, mica, glas pearls, sand, alumina trioxide, magnesium oxides, or zinc phosphates.

The epoxy resins mentioned herein can contain reactive or non reactive diluents. Examples of reactive diluents are low molecular mass compounds with 1 to 5 glycidyl functionalities with linear or cyclic backbones with 2 to 20 carbon units or ether backbones or, ester backbones. Examples of non reactive diluents are aceton, keton, esters, ether, aromatic solvents or their mixtures.

Consequently, also the epoxy systems may contain the above-mentioned pigments and/or fillers and/or reactive diluents and/or non-reactive diluents.

The epoxy resins and the epoxy systems mentioned herein may be used for coatings, for example flooring coatings, construction coatings, metal coatings, for adhesives, for sealants, particularly for structure adhesives in metal construction, in wood and concrete construction, for lamination, in particular for lamination of electronic circuits and equipments, for composites and casting applications, for chemical dowels, for electrical encapsulation. The same applies to the epoxy systems mentioned herein.

The phenolic polymer described herein as part of the epoxy system according to the invention may also be used as an accelerator for the curing of epoxy resins. When the phenolic polymer of the invention is used as an accelerator for the curing of epoxy resins a hardener comprising amine, anhydride, phenolic, and/or thiol functionalities is preferably present. More preferably, a hardener comprising amine functionalities is present.

The phenolic polymer described herein as part of the epoxy system according to the invention may also be used as a hardener for epoxy resins. When the phenolic polymer of the invention is used as a hardener for the curing of epoxy resins, a co-hardener comprising amine, anhydride, phenolic, and/or thiol functionalities, in particular comprising amine functionalities, may also be present.

All the details concerning the phenolic polymer, the epoxy resin, the hardener, the accelerator, optional additional accelerators, and optional additional compounds described above in the context of the epoxy system apply to the use of the phenolic polymer accordingly.

In particular, the phenolic polymer described herein as part of the epoxy system according to the invention may serve at room temperature or below as an accelerator. At higher temperatures, the phenolic polymer of the invention may also serve as a hardener. It was found that the phenolic polymer yields particularly good results as a hardener for epoxy resins at a temperature of from 50 to 200°C, preferably from 100 to 170°C, more preferably from 120 to 160°C.

Preferably, the phenolic polymer described herein as part of the epoxy system according to the invention is used at room temperature or below, in particular at -10°C to 40°C, more particularly at 15°C to 25°C as an accelerator for epoxy resins.

When the phenolic polymer is used as an accelerator or as a hardener for epoxy resins, the phenolic polymer is preferably part of an epoxy system, preferably an epoxy system according to the invention.

As hardener, the phenolic polymer may be used in different amounts depending on the desired degree of cross-linking. As hardener, the phenolic polymer is preferably used at a ratio of OH:epoxy groups of 0.5:1 to 10:1, preferably 1:1 to 10:1, based on the total mass of the epoxy system, in particular in casting, lamination and adhesive applications. As accelerator, the phenolic polymer is preferably used in an amount of 0.5 to 20 wt.%, more preferable 5 to 15 wt.% and even more preferably 8 to 12 wt.%, based on the total mass of the epoxy system.

Moreover, the invention also provides for a kit-of-parts comprising an epoxy resin and the phenolic polymer described herein as part of the epoxy system according to the invention, and a hardener comprising amine, anhydride, phenolic, and/or thiol, in particular amine, functionalities. The kit-of-parts according to the invention is preferably a two part epoxy system.

All the details concerning the phenolic polymer, the epoxy resin, the hardener, the accelerator, optional additional accelerators, and optional additional compounds described above in the context of the epoxy system apply to the kit-of-parts accordingly.

In the kit-of-parts, the phenolic polymer and the hardener are preferably present as a mixture that optionally contains a solvent.

The following examples serve to further explain the invention.

### Examples

Abbreviations
SP = Softening point
DVB = Divinylbenzene
EVB = Ethylvinylbenzene
DIPB = Diisopropenylbenzene
DVBP = Divinylbenezene-phenol
DCPD = Dicyclopentadiene

Suppliers of chemicals:

| Chemical | Purity | Supplier |
|---|---|---|
| DVB | 62% | Sigma-Aldrich |
| DVB | 80% | Sigma-Aldrich |
| DCPD | 80% | Braskem |
| DIPB | >98% | Sigma-Aldrich |
| Phenol | 99% | PanReac AppliChem |
| 4-Tert-octylphenol | 97% | Sigma-Aldrich |
| BF₃*OEt₂ | >98% | Bernd Kraft |
| Xylene | >98% | Bernd Kraft |

### Example 1

Phenol (282 g) was dissolved in toluene (138 g) in a three-neck flask equipped with a dimroth coil condenser and a dropping funnel at 70 °C followed by the addition of BF_{3*}(OEt₂) (2.01 mL). Divinyl benzene (195 g, 62% purity) was added dropwise via the dropping funnel over a period of 30 minutes to the reaction mixture. After the addition the solution was stirred for 2 hours at a reaction temperature of 90 °C. The polymerization was quenched by addition of chalk. Filtration of the crude product and purification via steam distillation at 230 °C yielded the resin as colorless solid. The results of the characterization of the phenolic polymer are presented in the table below.

**Table 1: Analysis values example 1**

| SP [°C] ASTM 3461 | Tg [°C] | OH content [wt.%] | Mn [g/mol] | Mw [g/mol] | Mz [g/mol] |
|---|---|---|---|---|---|
| 42 | 13 | 8.6 | 528 | 735 | 1066 |

### Example 2

Phenol (254 g) was dissolved in toluene (138 g) in a three-neck flask equipped with a dimroth coil condenser and a dropping funnel at 70 °C followed by the addition of BF_{3*}(OEt₂) (2.01 mL). Divinyl benzene (195 g, 62% purity) was added dropwise via the dropping funnel over a period of 30 minutes to the reaction mixture. After the addition the solution was stirred for 2 hours at a reaction temperature of 90°C. The polymerization was quenched by addition of chalk. Filtration of the crude product and purification via steam distillation at 230 °C yielded the resin as colorless solid. The results of the characterization of the phenolic polymer are presented in the table below.

**Table 2: Analysis values example 2**

| SP [°C] ASTM 3461 | Tg [°C] | OH content [wt.%] | Mn [g/mol] | Mw [g/mol] | Mz [g/mol] |
|---|---|---|---|---|---|
| 53 | 27 | 7.3 | 592 | 960 | 1683 |

**Table 3: Summary of example 1-2**

| | Molar ratio Phenol : DVB: EVB | | | SP [°C] ASTM 3461 | Tg [°C] | OH Content [wt. %] | Mn [g/mol] | Mw [g/mol] | Mz [g/mol] |
|---|---|---|---|---|---|---|---|---|---|
| Example 1 | 3.6 | 1.7 | 1.0 | 42 | 13 | 8,6 | 528 | 735 | 1066 |
| Example 2 | 3.2 | 1.7 | 1.0 | 53 | 27 | 7.3 | 592 | 960 | 1683 |

### Example 3

Phenol (94 g) was dissolved in toluene (61 g) in a three-neck flask equipped with a dimroth coil condenser and a dropping funnel at 40 °C followed by the addition of BF_{3*}(OEt₂) (0.88 mL). Dicyclopentadiene (44 g, 80% purity, 5% vinyl aromatics (indene, methyl styrene isomers) provided by Braskem) was added dropwise via the dropping funnel over a period of 30 minutes to the reaction mixture. After the addition the solution was stirred for 3 hours at a reaction temperature of 120 °C. The polymerization was quenched by addition of chalk. Filtration of the crude product and purification via steam distillation at 250 °C yielded the resin as red solid. The results of the characterization of the phenolic polymer are presented in the table below.

**Table 4: Analysis values example 3**

| SP [°C] ASTM 3461 | Tg [°C] | OH content [wt.%] | Mn [g/mol] | Mw [g/mol] | Mz [g/mol] |
|---|---|---|---|---|---|
| 98 | 65 | 7.8 | 487 | 702 | 1049 |

### Example 4

Phenol (282 g) was dissolved in toluene (92 g) in a three-neck flask equipped with a dimroth coil condenser and a dropping funnel at 40°C followed by the addition of BF_{3*}(OEt₂) (2,70 mL). Dicyclopentadiene (132 g, 80% purity, 5% vinyl aromatics (indene, methyl styrene isomers) provided by Braskem) was added dropwise via the dropping funnel over a period of 30 minutes to the reaction mixture. After the addition the solution was stirred for 3 hours at a reaction temperature of 120 °C. The polymerization was quenched by addition of chalk. Filtration of the crude product and purification via steam distillation at 250 °C yielded the resin as red solid. The results of the characterization of the phenolic polymer are presented in the table below.

**Table 5: Analysis values example 4**

| SP [°C] ASTM 3461 | Tg [°C] | OH content [wt.%] | Mn [g/mol] | Mw [g/mol] | Mz [g/mol] |
|---|---|---|---|---|---|
| 109 | 72 | 7.0 | 510 | 761 | 1168 |

### Example 5

4-Tert-octylphenol (255 g) was dissolved in xylene (255 g) in a three-neck flask equipped with a dimroth coil condenser and a dropping funnel at 70 °C followed by the addition of BF_{3*}(OEt₂) (0.921 mL). Divinylbenzene (195 g, 62% purity: divinylbenzene : ethylvinylbenzene = 62:38) was added dropwise via the dropping funnel over a period of 14 minutes to the reaction mixture. After the addition the solution was stirred for 2 hours at a reaction temperature of 90 °C. The polymerization was quenched by the addition of chalk. Filtration of the crude product and purification via steam distillation at 230°C yielded the resin as colorless solid. The results of characterization of the phenolic polymer are presented in the table below.

**Table 6: Analysis values example 5**

| SP [°C] ASTM 3461 | Tg [°C] | OH content [wt.%] | Mn [g/mol] | Mw [g/mol] | Mz [g/mol] |
|---|---|---|---|---|---|
| 41 | 4.4 | 5.5 | 588 | 897 | 1321 |

### Example 6

Phenol (254 g) and divinylbenzene (195 g, 62% purity: divinylbenzene : ethylvinylbenzene = 62:38) was dissolved in Xylene (138 g) in a three-neck flask equipped with a dimroth coil condenser and a dropping funnel at 30 °C followed by the portion wise addition of BF_{3*}(OEt₂) (0.624 mL). The reaction mixture was cooled by an ice bath. After the addition the solution was stirred for 1 hour at a reaction temperature of 70 °C. The polymerization was quenched by the addition of chalk. Filtration of the crude product and purification via steam distillation at 230°C yielded the resin as colorless solid. The results of characterization of the phenolic polymer are presented in the table below.

**Table 7: Analysis values example 6**

| SP [°C] ASTM 3461 | Tg [°C] | OH content [wt.%] | Mn [g/mol] | Mw [g/mol] | Mz [g/mol] |
|---|---|---|---|---|---|
| 68 | 31 | 7.7 | 711 | 1379 | 2564 |

### Example 7

Phenol (203 g) and divinylbenzene (195 g, 62% purity: divinylbenzene : ethylvinylbenzene = 62:38) was dissolved in xylene (138 g) in a three-neck flask equipped with a dimroth coil condenser and a dropping funnel at 30 °C followed by the portion wise addition of BF_{3*}(OEt₂) (0,624 mL). The reaction mixture was cooled by an ice bath. After the addition the solution was stirred for 1 hour at a reaction temperature of 70 °C. The polymerization was quenched by the addition of chalk. Filtration of the crude product and purification via steam distillation at 230°C yielded the resin as colorless solid. The results of characterization of the phenolic polymer are presented in the table below.

**Table 8: Analysis values example 7**

| SP [°C] ASTM 3461 | Tg [°C] | OH content [wt.%] | Mn [g/mol] | Mw [g/mol] | Mz [g/mol] |
|---|---|---|---|---|---|
| 77 | 37 | 6.8 | 850 | 2014 | 4234 |

### Example 8

Phenol (177 g) and divinylbenzene (195 g, 62% purity: divinylbenzene : ethylvinylbenzene = 62:38) was dissolved in xylene (138 g) in a three-neck flask equipped with a dimroth coil condenser and a dropping funnel at 30 °C followed by the portion wise addition of BF_{3*}(OEt₂) (0.624 mL). The reaction mixture was cooled by an ice bath. After the addition the solution was stirred for 1 hour at a reaction temperature of 70 °C. The polymerization was quenched by the addition of chalk. Filtration of the crude product and purification via steam distillation at 230°C yielded the resin as colorless solid. The results of characterization of the phenolic polymer are presented in the table below.

**Table 9: Analysis values example 8**

| SP [°C] ASTM 3461 | Tg [°C] | OH content [wt.%] | Mn [g/mol] | Mw [g/mol] | Mz [g/mol] |
|---|---|---|---|---|---|
| 84 | 40 | 6.0 | 953 | 2902 | 7177 |

### Example 9

Phenol (141 g) and divinylbenzene (195 g, 62% purity: divinylbenzene : ethylvinylbenzene = 62:38) was dissolved in xylene (138 g) in a three-neck flask equipped with a dimroth coil condenser and a dropping funnel at 30 °C followed by the portion wise addition of BF_{3*}(OEt₂) (0,624 mL). The reaction mixture was cooled by an ice bath. After the addition the solution was stirred for 1 hour at a reaction temperature of 70 °C. The polymerization was quenched by the addition of chalk. Filtration of the crude product and purification via steam distillation at 230°C yielded the resin as colorless solid. The results of characterization of the phenolic polymer are presented in the table below.

**Table 10: Analysis values example 9**

| SP [°C] ASTM 3461 | Tg [°C] | OH content [wt.%] | Mn [g/mol] | Mw [g/mol] | Mz [g/mol] |
|---|---|---|---|---|---|
| 98 | 49 | 5.8 | 1228 | 6787 | 21520 |

### Example 10

Phenol (141 g) and divinylbenzene (215 g, 62% purity: divinylbenzene : ethylvinylbenzene = 62:38) was dissolved in xylene (138 g) in a three-neck flask equipped with a dimroth coil condenser and a dropping funnel at 30 °C followed by the portion wise addition of BF_{3*}(OEt₂) (0.624 mL). The reaction mixture was cooled by an ice bath. After the addition the solution was stirred for 1 hour at a reaction temperature of 70 °C. The polymerization was quenched by the addition of chalk. Filtration of the crude product and purification via steam distillation at 230°C yielded the resin as colorless solid. The results of characterization of the phenolic polymer are presented in the table below.

**Table 11: Analysis values example 10**

| SP [°C] ASTM 3461 | Tg [°C] | OH content [wt.%] | Mn [g/mol] | Mw [g/mol] | Mz [g/mol] |
|---|---|---|---|---|---|
| 104 | 46 | 5.5 | 1405 | 9468 | 30130 |

**Table 12: Summary of example 6-10**

| | Ratio phenol : DVB : EVB | | | SP [°C] ASTM 3461 | Tg [°C] | OH Content [wt. %] | Mn [g/mol] | Mw [g/mol] | Mz [g/mol] |
|---|---|---|---|---|---|---|---|---|---|
| Example 6 | 3.2 | 1.7 | 1.0 | 68 | 31 | 7.7 | 711 | 1379 | 2564 |
| Example 7 | 2.6 | 1.7 | 1.0 | 77 | 37 | 6.8 | 850 | 2014 | 4234 |
| Example 8 | 2.3 | 1.7 | 1.0 | 84 | 40 | 6.0 | 953 | 2902 | 7177 |
| Example 9 | 1.8 | 1.7 | 1.0 | 98 | 49 | 5.8 | 1228 | 6787 | 21520 |
| Example 10 | 1.5 | 1.7 | 1.0 | 104 | 46 | 5.5 | 1405 | 9468 | 30130 |

### Example 11

Phenol (254 g) and divinylbenzene (195 g, 80% purity: divinylbenzene : ethylvinylbenzene = 80:20) was dissolved in xylene (138 g) in a three-neck flask equipped with a dimroth coil condenser and a dropping funnel at 30 °C followed by the portion wise addition of BF_{3*}(OEt₂) (0.234 mL). The reaction mixture was cooled by an ice bath. After the addition the solution was stirred for 1 hour at a reaction temperature of 70 °C. The polymerization was quenched by the addition of chalk. Filtration of the crude product and purification via steam distillation at 230°C yielded the resin as colorless solid. The results of characterization of the phenolic polymer are presented in the table below.

**Table 13: Analysis values example 11**

| SP [°C] ASTM 3461 | Tg [°C] | OH content [wt.%] | Mn [g/mol] | Mw [g/mol] | Mz [g/mol] |
|---|---|---|---|---|---|
| 93 | 53 | 7.2 | 963 | 2209 | 4628 |

### Example 12

Phenol (207 g) and divinylbenzene (195 g, 80% purity: divinylbenzene : ethylvinylbenzene = 80:20) was dissolved in xylene (138 g) in a three-neck flask equipped with a dimroth coil condenser and a dropping funnel at 30 °C followed by the portion wise addition of BF_{3*}(OEt₂) (0.234 mL). The reaction mixture was cooled by an ice bath. After the addition the solution was stirred for 1 hour at a reaction temperature of 70 °C. The polymerization was quenched by the addition of chalk. Filtration of the crude product and purification via steam distillation at 230°C yielded the resin as colorless solid. The results of characterization of the phenolic polymer are presented in the table below.

**Table 14: Analysis values example 12**

| SP [°C] ASTM 3461 | Tg [°C] | OH content [wt.%] | Mn [g/mol] | Mw [g/mol] | Mz [g/mol] |
|---|---|---|---|---|---|
| 101 | 57 | 6.6 | 1149 | 3976 | 10400 |

**Table 15: Comparison of example 6-7 and 11-12**

| | Molar ratio phenol : DVB : EVB | | | Molar ratio phenol : sum (DVB+EVB) | | SP [°C] ASTM 3461 | Tg [°C] | OH Content [wt. %] | Mn [g/mol] | Mw [g/mol] | Mz [g/mol] |
|---|---|---|---|---|---|---|---|---|---|---|---|
| Example 6 | 3.2 | 1.7 | 1.0 | 1.8 | 1.0 | 68 | 31 | 7.7 | 711 | 1379 | 2564 |
| Example 11 | 6.1 | 4.1 | 1.0 | 1.8 | 1.0 | 93 | 53 | 7.2 | 963 | 2209 | 4628 |
| Example 7 | 2.6 | 1.7 | 1.0 | 1.5 | 1.0 | 77 | 37 | 6.8 | 850 | 2014 | 4234 |
| Example 12 | 5.0 | 4.1 | 1.0 | 1.5 | 1.0 | 101 | 57 | 6.6 | 1149 | 3976 | 10400 |

### Example 13 (comparative example)

Phenol (141 g) and diisopropenylbenzene (158 g) was dissolved in xylene (138 g) in a three-neck flask equipped with a dimroth coil condenser and a dropping funnel at 30 °C followed by the portion wise addition of BF_{3*}(OEt₂) (0.234 mL). The reaction mixture was cooled by an ice bath. After the addition the solution was stirred for 1 hour at a reaction temperature of 70 °C. The polymerization was quenched by the addition of chalk. Filtration of the crude product and purification via steam distillation at 230°C yielded the resin as colorless solid. The results of characterization of the phenolic polymer are presented in the table below.

**Table 16: Analysis values example 13 (comparative example)**

| SP [°C] ASTM 3461 | Tg [°C] | OH content [wt.%] | Mn [g/mol] | Mw [g/mol] | Mz [g/mol] |
|---|---|---|---|---|---|
| 140 | 82 | 3.6 | 1654 | 7567 | 21890 |

### Example 14

Phenol (141 g), styrene (52 g) and diisopropenylbenzene (79 g) was dissolved in xylene (138 g) in a three-neck flask equipped with a dimroth coil condenser and a dropping funnel at 30 °C followed by the portion wise addition of BF_{3*}(OEt₂) (0.234 mL). The reaction mixture was cooled by an ice bath. After the addition the solution was stirred for 1 hour at a reaction temperature of 70 °C. The polymerization was quenched by the addition of chalk. Filtration of the crude product and purification via steam distillation at 230°C yielded the resin as colorless solid. The results of characterization of the phenolic polymer are presented in the table below.

**Table 17: Analysis values example 14**

| SP [°C] ASTM 3461 | Tg [°C] | OH content [wt.%] | Mn [g/mol] | Mw [g/mol] | Mz [g/mol] |
|---|---|---|---|---|---|
| 96 | 46 | 4.2 | 722 | 2110 | 4853 |

### Example 15

Phenol (141 g), styrene (73 g) and diisopropenylbenzene (48 g) was dissolved in Xylene (138 g) in a three-neck flask equipped with a dimroth coil condenser and a dropping funnel at 30 °C followed by the portion wise addition of BF_{3*}(OEt₂) (0.234 mL). The reaction mixture was cooled by an ice bath. After the addition the solution was stirred for 1 hour at a reaction temperature of 70 °C. The polymerization was quenched by the addition of chalk. Filtration of the crude product and purification via steam distillation at 230°C yielded the resin as colorless solid. The results of characterization of the phenolic polymer are presented in the table below.

**Table 18: Analysis values example 15**

| SP [°C] ASTM 3461 | Tg [°C] | OH content [wt.%] | Mn [g/mol] | Mw [g/mol] | Mz [g/mol] |
|---|---|---|---|---|---|
| 58 | 9 | 4,9 | 435 | 1138 | 2608 |

**Table 19: Summary of example 13-15**

| | Ratio diisopropenyl benzene : styrene* | | SP [°C] ASTM 3461 | Tg [°C] | OH Content [wt. %] | Mn [g/mol] | Mw [g/mol] | Mz [g/mol] |
|---|---|---|---|---|---|---|---|---|
| Example 13 | 1.0 | 0 | 140 | 82 | 3.6 | 1654 | 7567 | 21890 |
| Example 14 | 1.0 | 1.0 | 96 | 46 | 4.2 | 722 | 2110 | 4853 |
| Example 15 | 0.4 | 1.0 | 58 | 9 | 4.9 | 435 | 1138 | 2608 |

| | | | | | | | | |
|---|---|---|---|---|---|---|---|---|
| *ratio of phenol to the sum of diisopropenyl benzene and styrene is kept constant | | | | | | | | |

### Example 16

Phenol (141 g), α-methylstyrene (59 g) and diisopropenylbenzene (79 g) was dissolved in xylene (138 g) in a three-neck flask equipped with a dimroth coil condenser and a dropping funnel at 30 °C followed by the portion wise addition of BF_{3*}(OEt₂) (0.234 mL). The reaction mixture was cooled by an ice bath. After the addition the solution was stirred for 1 hour at a reaction temperature of 70 °C. The polymerization was quenched by the addition of chalk. Filtration of the crude product and purification via steam distillation at 230°C yielded the resin as colorless solid. The results of characterization of the phenolic polymer are presented in the table below.

**Table 20: Analysis values example 16**

| SP [°C] ASTM 3461 | Tg [°C] | OH content [wt.%] | Mn [g/mol] | Mw [g/mol] | Mz [g/mol] |
|---|---|---|---|---|---|
| 81 | 40 | 3.4 | 590 | 1444 | 3244 |

As can be seen from the exemplary syntheses above, the properties of the polymeric phenolic polymer can be varied in a wide range.

### Explanation of the analytical methods

### Molar mass Distribution via GPC

The molar mass distribution (Mn, Mw, Mz) was estimated via gel permeation chromatography (GPC) with a SECcurity²-System supplied by the company PSS-Polymers. The used column system consists of a 3 µm precolumn and three 3 µm 1000 Å main columns filled with a styrene divinylbenzene copolymer as column material. For substance detection a refraction index (RI) detector was used. Unstabilized ULC/MS-grade THF was used as eluent supplied by the company Biosolve. Each measurement run was performed isothermal at 40°C. ReadyCal-Kit Poly(styrene) low (Mp 266 - 66 000 Da) was used as external standard supplied by PSS-Polymer.

### Glas Transition Temperature via DSC

The glass transition temperature (Tg) was estimated with a DSC 2/400 with intra cooler supplied by the company Mettler Toledo. Aluminum crucibles with pin hole with a volume of 40 µl (Me-26763 AL-Crucibles) were used as sample vessels. The sample weight amounted to 10 - 20 mg. For the evaluation of the thermal properties, a heating-cooling-heating-cooling sequence was chosen as analytical method with a heating / cooling rate of 10 K/min within a measuring window between -40 °C to 150 °C. The Tg evaluation was performed in accordance to DIN 53765.

### Softening point (SP) via Mettler Ring & Ball

The softening points were estimated via the method "Ring & Ball" in accordance to ASTM D 3461 "Softening point of asphalt and pitch - Mettler cup and ball method". A FP 90 Central Processor in combination with a FP 83 HT Dropping Point Cell supplied by Mettler Toledo was used a testing device.

### Hydroxyl content

The hydroxyl content was estimated via a potentiometric titration in accordance to DIN 53240-2 (1-methylimidazol catalyzed acetylation of free OH-groups with acetic anhydride followed by a titration with 0.5 M NaOH). The measurement was performed with an automated titration unite (Titrando in combination with Titroprozessor 840 Touch Control and Dosimate 6.2061.010) supplied by Deutsche Metrohm GmbH & Co. KG.

### Application of the Accelerator in Epoxy Systems

The phenolic polymer, for example the DVBP resins prepared in the examples above, is suitable as modifier in coatings, adhesives, and composite formulations. Particularly in epoxy-based systems it is usable as accelerator and chemical resistance enhancer.

To investigate its effect in epoxy systems the divinylbenzene phenol (DVBP) resin derived from the synthetis example 2 was tested in the curing of the commercially available epoxy resin Epikote 828^{®} with the curing agent Epicure Agent 548^{®}. For comparison purposes the epoxy system without additional accelerator (Std.) as well as the influence of a styrenated phenol, Novares^{®} LS500 a commonly applied accelerator for the curing of epoxy resins, were tested with epoxy resin Epikote 828^{®} and curing agent Epicure Agent 548^{®}. Furthermore, the influence on the mechanical properties and chemical resistance of cured epoxy resins was investigated.

### General Procedure for the Curing of Epoxy Resins

Epikote 828^{®} and a mixture of Epicure Agent 548^{®} and the corresponding accelerator as shown in table 21 were added to a 100 mL plastic cup at room temperature and mixed in a speed mixer at 2500 rpm for 1 min.

**Table 21: Formulation of tested epoxy systems**

| Curing example | Epikote 828^{®}[g] | Epicure Agent 548^{®} [g] | Accelerator [g] |
|---|---|---|---|
| 1 | 62 | 38 | example 2: 15 g |
| 2 (comparative) | 62 | 38 | styrenated phenol: 15 g |
| 3 (comparative) | 62 | 38 | - |

Afterwards the corresponding amounts of sample were extracted for the different application tests. Curing was conducted at room temperature.

### Effects of acceleration

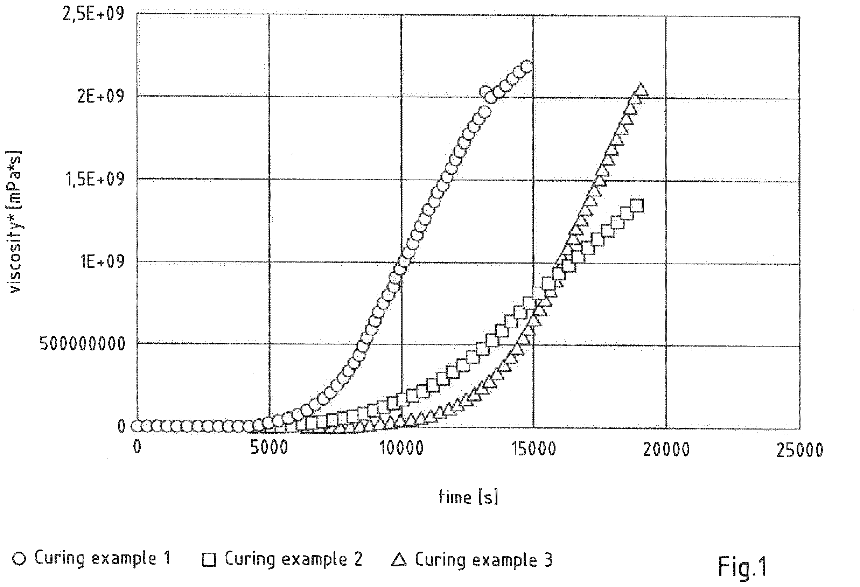

20g of the above shown mixture were extracted for a rheological analysis, which was directly started after the mixing of the substances and transferred to the rheometer. The curing process was analyzed via a rheometer in accordance with the general procedure at 40°C. The time-dependent results of the rheological analysis are shown in Table 22 and Figure 1. Table 22 displays representative time points of the time-viscosity relationship during the rheology measurement. Figure 1 show the complete complete development of the viscosity over time.

**Table 22: Complex viscosity in dependence of time of the tested expoy systems**

| Curing example 3 | | Curing example 2 | | Curing example 1 | |
|---|---|---|---|---|---|
| time [s] | complex viscosity [mPas] | time [s] | complex viscosity [mPas] | time [s] | complex viscosity [mPas] |
| 125,7 | 1429,3 | 64,97 | 2243,4 | 67,02 | 6385 |
| 515,7 | 2003,1 | 455 | 3296,9 | 457 | 14134 |
| 995,7 | 3337,3 | 935 | 8002,3 | 937 | 39695 |
| 1536 | 6260,9 | 1475 | 22198 | 1477 | 1,27E+05 |
| 2016 | 11179 | 1955 | 52853 | 1957 | 3,04E+05 |
| 2526 | 20766 | 2465 | 1,28E+05 | 2467 | 6,05E+05 |
| 3006 | 36972 | 2945 | 2,87E+05 | 2947 | 1,37E+06 |
| 3576 | 72520 | 3515 | 7,33E+05 | 3517 | 3,57E+06 |
| 4056 | 1,27E+05 | 3995 | 1,47E+06 | 3997 | 7,60E+06 |
| 5016 | 3,82E+05 | 4955 | 5,20E+06 | 4957 | 2,72E+07 |
| 5496 | 6,64E+05 | 5435 | 8,94E+06 | 5437 | 4,52E+07 |
| 6096 | 1,27E+06 | 6035 | 1,61E+07 | 6037 | 7,88E+07 |
| 6576 | 2,06E+06 | 6515 | 2,40E+07 | 6517 | 1,18E+08 |
| 7056 | 3,29E+06 | 6995 | 3,43E+07 | 6997 | 1,72E+08 |
| 7536 | 5,18E+06 | 7475 | 4,69E+07 | 7477 | 2,45E+08 |
| 8016 | 8,03E+06 | 7955 | 6,23E+07 | 7957 | 3,43E+08 |
| 8496 | 1,22E+07 | 8435 | 8,07E+07 | 8437 | 4,74E+08 |
| 9096 | 1,97E+07 | 9035 | 1,09E+08 | 9037 | 6,78E+08 |
| 9576 | 2,83E+07 | 9515 | 1,36E+08 | 9517 | 8,24E+08 |
| 1,01E+04 | 3,97E+07 | 9995 | 1,67E+08 | 9997 | 9,87E+08 |
| 1,05E+04 | 5,46E+07 | 1,05E+04 | 2,02E+08 | 1,05E+04 | 1,14E+09 |
| 1,10E+04 | 7,41E+07 | 1,10E+04 | 2,43E+08 | 1,10E+04 | 1,30E+09 |
| 1,15E+04 | 9,87E+07 | 1,14E+04 | 2,88E+08 | 1,14E+04 | 1,45E+09 |
| 1,20E+04 | 1,30E+08 | 1,19E+04 | 3,40E+08 | 1,19E+04 | 1,59E+09 |
| 1,25E+04 | 1,71E+08 | 1,24E+04 | 3,98E+08 | 1,24E+04 | 1,74E+09 |
| 1,26E+04 | 1,83E+08 | 1,25E+04 | 4,13E+08 | 1,25E+04 | 1,78E+09 |
| 1,31E+04 | 2,37E+08 | 1,30E+04 | 4,78E+08 | 1,30E+04 | 1,88E+09 |
| 1,35E+04 | 3,07E+08 | 1,35E+04 | 5,50E+08 | 1,35E+04 | 2,01E+09 |
| 1,40E+04 | 3,96E+08 | 1,40E+04 | 6,28E+08 | 1,40E+04 | 2,07E+09 |
| 1,45E+04 | 5,07E+08 | 1,44E+04 | 7,04E+08 | 1,44E+04 | 2,15E+09 |
| 1,49E+04 | 6,05E+08 | 1,48E+04 | 7,61E+08 | 1,48E+04 | 2,19E+09 |
| 1,50E+04 | 6,37E+08 | 1,49E+04 | 7,81E+08 | | |
| 1,51E+04 | 6,68E+08 | 1,50E+04 | 8,00E+08 | | |
| 1,55E+04 | 7,68E+08 | 1,54E+04 | 8,56E+08 | | |
| 1,56E+04 | 8,09E+08 | 1,55E+04 | 8,75E+08 | | |
| 1,61E+04 | 9,77E+08 | 1,60E+04 | 9,46E+08 | | |
| 1,65E+04 | 1,17E+09 | 1,65E+04 | 1,01E+09 | | |
| 1,70E+04 | 1,34E+09 | 1,70E+04 | 1,09E+09 | | |
| 1,75E+04 | 1,51E+09 | 1,74E+04 | 1,16E+09 | | |
| 1,80E+04 | 1,70E+09 | 1,79E+04 | 1,22E+09 | | |
| 1,81E+04 | 1,74E+09 | 1,80E+04 | 1,24E+09 | | |
| 1,85E+04 | 1,86E+09 | 1,84E+04 | 1,29E+09 | | |
| 1,86E+04 | 1,90E+09 | 1,85E+04 | 1,31E+09 | | |
| 1,91E+04 | 2,04E+09 | 1,90E+04 | 1,37E+09 | | |

As shown above the viscosity in each experiment increased exponentially after a distinct amount of time. Both, the viscosities of the epoxy systems of curing example 2 with styrenated phenol and curing example 1 increased faster than the standard system in curing example 3 without additional additives indicating an acceleration effect. Furthermore, the effect of the phenolic polymer exemplified by the synthesis example 2 on the acceleration of the curing process in curing example 1 exceeds the styrenated phenol in curing example 2.

### Complex viscosity via rheometer

The complex viscosity of the epoxy curing was measured with an Anton Paar MCR302 rheometer. An aluminum plate system (PP15 Geometry) was used. The measurement was performed isotherm at 40°C in oscillation mode at a frequency of 10 rads⁻¹ with a shear gap of 1 mm. The deformation was started at 10% and was reduced to 1% with 0.2%/min. After the deformation reduction to 1% the rest of the measurement was performed at this deformation level until a torque of 100 mNm was reached.

### Impact on mechanical properties of epoxy system

### Pendulum Hardness via Pendulum Hardness Tester

The pendulum hardness of the cured epoxy resins was measured with an BYK-Gardner pendulum hardness tester according to König (DIN 53 157). 10 g each of the different mixtures were poured in a defined mold and stored at room temperature for 1 day prior to the initial measurement. The prepared samples were clamped in the tester and the pendulum was locked in the starting position. The measurement was initiated by the pendulum release. The measurements were repeated after 1, 2, 6 and 13 weeks storage time. The results of the measurements are shown in Table 23.

**Table 23: Pendulum hardness**

| Time [weeks] | 0 | 1 | 2 | 6 | 13 |
|---|---|---|---|---|---|
| | Pendulum Hardness [s] | | | | |
| Curing example 3 | 129 | 179 | 187 | 203 | 203 |
| Curing example 2 | 75 | 115 | 133 | 152 | 155 |
| Curing example 1 | 136 | 171 | 185 | 192 | 196 |

As follows from Table 23, the epoxy system containing the phenolic polymer as accelerator of curing example 1 reached a high pendulum hardness value already at the beginning of the measurement (0 weeks). By contrast, the epoxy system without any accelerator hat a lower pendulum hardness at the beginning of the measurement and the epoxy system containing the styrenated phenol as accelerator displayed an even lower initial pendulum hardness. After the first week, all of the curing examples displayed higher pendulum hardness values. Thereafter, the pendulum hardness remained fairly constant for the curing example 1 containing the phenolic polymer of synthesis example 2 as accelerator while the curing example 3 without any accelerator displayed a larger increase in the pendulum hardness after the first week. By contrast, the epoxy system containing the styrenated phenol accelerator displayed a significant increase in the pendulum hardness even from week 2 to week 13.

### Tensile strength and maximum elongation via tensile testing

The tensile strength and elongation at break of the cured epoxy resins were measured via a Shimadzu Autograph AGS-X tensile testing machine. Each of the different mixtures were poured in defined bone shaped molds and stored at room temperature for 2 weeks. Prior to the measurement the dimensions of the samples were determined. The measurements were performed with a starting gauge length of 130.0 mm at room temperature with a speed of 10 mm/min. The results of the measurements and calculated average values are shown in Table 24.

**Table 24: Tensile tests**

| ITEMS | THICKNESS | WIDTH | GAUGE LENGTH | TENSILE STRENGTH | ELOGANTION AT BREAK |
|---|---|---|---|---|---|
| unit | mm | mm | mm | MPa | (%) |

| Curing example 3 (no accelerator) | | | | | |
|---|---|---|---|---|---|
| Sample 3-1 | 4.05 | 10.14 | 130.0 | 43.22 | 2.92 |
| Sample 3-2 | 4.06 | 10.16 | 130.0 | 46.71 | 3.26 |
| Sample 3-3 | 4.02 | 10.16 | 130.0 | 45.33 | 2.85 |
| Sample 3-4 | 4.09 | 10.10 | 130.0 | 50.36 | 3.57 |
| average | | | | 46.4 | 3.15 |

| Curing example 2 (styrenated phenol accelerator) | | | | | |
|---|---|---|---|---|---|
| Sample 2-1 | 3.88 | 10.16 | 130.00 | 1718..87 | 43.60 |
| Sample 2-2 | 3.91 | 10.18 | 130.00 | 1754.94 | 44.09 |
| Sample 2-3 | 3.88 | 10.21 | 130.00 | 1673.13 | 42.23 |
| Sample 2-4 | 3.83 | 10.17 | 130.00 | 1577.38 | 40.50 |
| Sample 2-5 | 3.83 | 10.17 | 130.00 | 1546.90 | 39.71 |
| average | | | | 1654.24 | 42.03 |

| Curing example 1 (synthesis example 2 as accelerator) | | | | | |
|---|---|---|---|---|---|
| Sample 1-1 | 3.89 | 10.16 | 130 | 51.02 | 3.36 |
| Sample 1-2 | 3.85 | 10.17 | 130 | 39.76 | 2.69 |
| Sample 1-3 | 3.99 | 10.17 | 130 | 40.13 | 2.70 |
| Sample 1-4 | 3.89 | 10.16 | 130 | 52.02 | 3.49 |
| average | | | | 45.73 | 3.06 |

Low molecular mass accelerators like styrenated phenols but also benzylalcohol or nonylphenol often cause softening of the epoxy systems that are exemplified by a high elongation at break The phenolic polymer of synthetis example 2 has only a small effect on the mechanical properties compared to the epoxy system without any accelerator as shown in the tensile tests (Table 24).

### Impact on chemical resistance

### General procedure for the chemical resistance test

10 g of each of the different mixtures were poured in 5 defined molds, which were stored at room temperature for 2 weeks. Afterwards the sample weight was determined followed by the immersion of the respective sample in a 100 mL closed glass bottle filled with 90mL of the distinct test media. The following test media were employed:
1. aqueous solution of acetic acid (10 w%),
2. aqueous solution of sodium hydroxide (5 w%),
3. xylene,
4. water

Every week the samples were taken out from the glass bottles, cleaned from residual test media and weighed. After the weighing the samples were returned to the glass bottle. The process was repeated for 6 weeks.

**Table 25: Water uptake**

| Time | 1 week | 2 weeks | 3 weeks | 6 weeks |
|---|---|---|---|---|
| | Weight change [%] | | | |
| Curing example 3 (no accelerator) | 0.48 | 0.74 | 0.94 | 1.30 |
| Curing example 2 (styrenated phenol accelerator) | 0.44 | 0.65 | 0.81 | 1.11 |
| Curing example 1 (phenolic polymer of synthesis example 2 as accelerator) | 0.37 | 0.55 | 0.69 | 0.96 |

Both curing example 2 and curing example 3 show an improvement to the storage stability of the cured epoxy resins under aqueous conditions (Table 25), which is indicated by reduced weight gain caused by swelling effects. When employing an accelerator, the weight gain was reduced to 0.96 wt. % (curing example 1) and 1.11 wt. % (curing example 2) in contrast to 1.30 wt. % (curing example 3).

**Table 26: Acetic acid (10%) uptake**

| Time | 1 week | 2 weeks | 3 weeks | 6 weeks |
|---|---|---|---|---|
| | Weight change [%] | | | |
| Curing example 3 (no accelerator) | 2.38 | 3.41 | 4.20 | 5.63 |
| Curing example 2 (styrenated phenol accelerator) | 0.81 | 1.16 | 1.44 | 1.96 |
| Curing example 1 (phenolic polymer of synthesis example 2 as accelerator) | 0.95 | 1.39 | 1.71 | 2.67 |

Both under acidic (Table 26) and under basic (Table 27) conditions, the hydrophilization properties of the accelerator of synthesis example 2 become evident. The swelling has been reduced under acidic conditions from 5.63 wt. % (curing example 3) to 2.67 wt. % (curing example 1) and under basic conditions from 1.06 wt. % (curing example 3) to 0.83 wt. % (curing example 1). In both cases the effect is comparable to the styrenated phenol of curing example 2 (acidic 1.96 wt. %; basic 0.90 wt. %).

**Table 27: Sodium hydroxid (5%) uptake**

| Time | 1 week | 2 weeks | 3 weeks | 6 weeks |
|---|---|---|---|---|
| | Weight change [%] | | | |
| Curing example 3 (no accelerator) | 0.39 | 0.59 | 0.75 | 1.06 |
| Curing example 2 (styrenated phenol accelerator) | 0.36 | 0.52 | 0.65 | 0.90 |
| Curing example 1 (phenolic polymer of synthesis example 2 as accelerator) | 0.30 | 0.45 | 0.57 | 0.83 |

**Table 28: Xylene uptake**

| Time | 1 week | 2 weeks | 3 weeks | 6 weeks |
|---|---|---|---|---|
| | Weight change [%] | | | |
| Curing example 3 (no accelerator) | 0.02 | 0.05 | 0.07 | 0.11 |
| Curing example 2 (styrenated phenol accelerator) | 0.19 | 0.71 | 1.30 | 2.43 |
| Curing example 1 (phenolic polymer of synthesis example 2 as accelerator) | -0.03 | 0.00 | -0.06 | 0.08 |

Both the cured epoxy system of curing example 1 (phenolic polymer of synthesis example 2 as accelerator) and of curing example 3 (no accelerator) showed very high chemical resistance to xylene. Almost no swelling effects (0.11 wt. % curing example 3; 0.08 wt. % curing example 1) could be observed during the test period (Table 28). In comparison, the styrenated phenol accelerator of curing example 2 deteriorated the resistance significantly. After 6 weeks a weight gain of 2.43 w% was detected for curing example 2.

The shown chemical resistance tests demonstrate DVBP resin is a modifier for coatings systems with an around improvement against aqueous as well as organic impact.

## Claims

1. An epoxy system comprising
an epoxy resin and
a phenolic polymer having a number average molar mass (Mₙ) of from 200 to 1,500 g/mol, determined as indicated in the specification, comprising a phenol compound, a linker group L and end group E, said phenolic polymer having the structure as presented in formula 1 below: 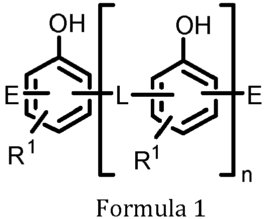
wherein the linker group L has the meaning of 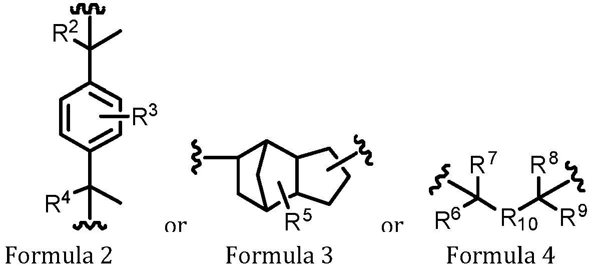 or 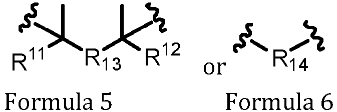
each end group E is a group of formula 2, 3, 4, 5 or 6 with only one bond to a phenol compound in formula 1 or has the meaning of 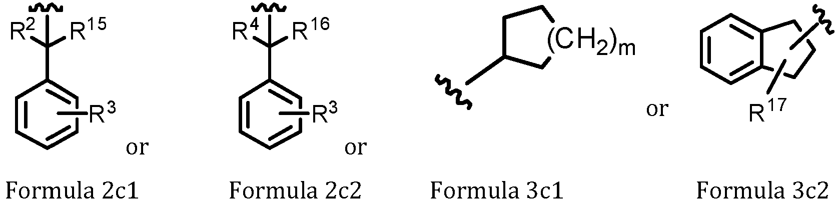
and wherein
R¹ is H, C₁₋₁₅ alkyl, or C₁₋₁₅ oxyalkyl, or C₆H₅(CR¹⁸R¹⁹)ₒ-Z-, preferably H, C₁₋₁₅ alkyl, or C₁₋₁₅ oxyalkyl,
R², R⁴, R⁶, R⁷, R⁸, R⁹, R¹¹ and R¹² are independently from each other H or C₁₋₅ alkyl,
R³ and R⁵ are H, OH, NO₂, halogen, C₁₋₅ alkyl or C₁₋₅ oxyalkyl,
R₁₀ and R₁₃ are C₁₋₅ alkyl or C₅₋₆ cycloalkyl,
R₁₄ is C₅₋₁₂ cycloalkyl, optionally substituted with a methyl or an ethyl group,
R¹⁵, R¹⁶, and R¹⁷ are independently from each other H or C₁₋₅ alkyl, preferably -CH₃,
R¹⁸ and R¹⁹ are independently of each other H or CH₃
Z is a covalent bond or -O-,
o is 1 or 0,
m is an integer from 1 to 7 and
n is an integer of from 2 to 21.

2. The epoxy system of claim 1, wherein said phenolic polymer comprises 50 wt.% to 70 wt.% phenol compound, 20 wt.% to 50 wt.% of the linker group L, in particular of difunctional monomers selected from a divinylbenzene compound, diclyclopentadiene compound or a compound of formula 4, 5 or 6, 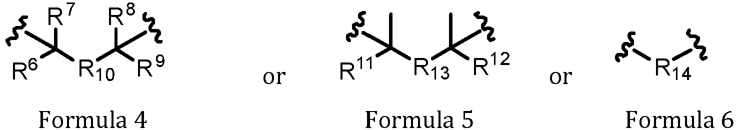 wherein the residues R⁶ to R¹⁴ have the same meaning as defined before, and/or 0 wt.% to 50 wt.%, in particular 5 wt.% to 40 wt.%, more particularly 10 wt.% to 40 wt.%, of the end group E, in particular of a monofunctional monomer having only one bond to a phenol compound in the phenolic polymer, based on the mass of the phenolic polymer.

3. The epoxy system of claims 1 or 2, wherein in the phenolic polymer R¹ is H, C₁₋₁₀ alkyl, in particular C₁₋₈ alkyl, more particularly C₁₋₅ alkyl, or C₁₋₁₀ oxyalkyl, in particular C₁₋₈ oxyalkyl, more particularly C₁₋₅ oxyalkyl.

4. The epoxy system of claims 1 to 3, wherein in the phenolic polymer the linker group L has the meaning of 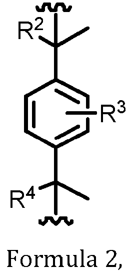 wherein R², R³, and R⁴ are as defined in claim 1, in particular H.

5. The epoxy system of claims 1 to 4, wherein in the phenolic polymer the end group E has the meaning of 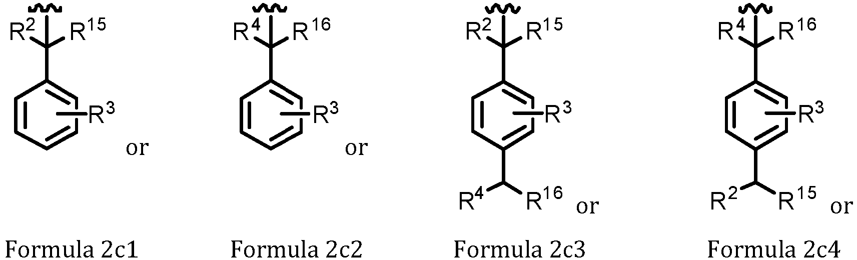 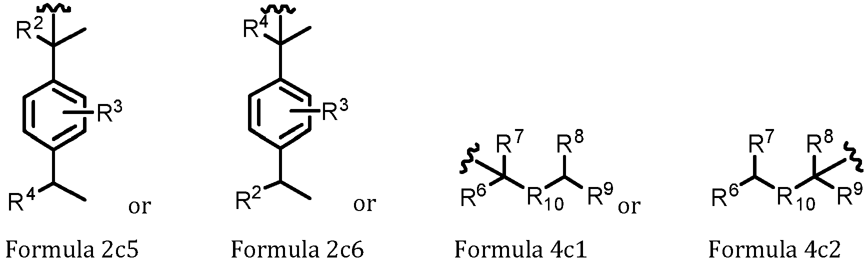 or 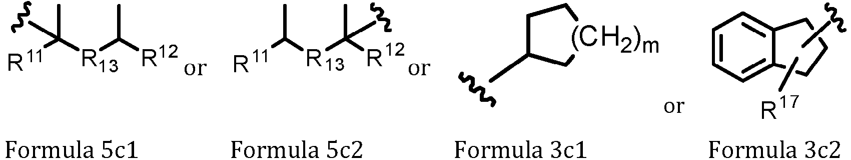
wherein R² to R¹³ are as defined in claim 1
m is an integer from 1 to 7 and
R¹⁵, R¹⁶, and R¹⁷ are independently from each other H or C₁₋₅ alkyl, preferably -CH₃.

6. The epoxy system of claims 1 to 5, wherein in the phenolic polymer the end group E has the meaning of 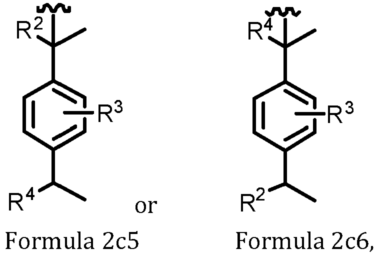 wherein R², R³, and R⁴ are as defined in claim 1, in particular H.

7. The epoxy system of claims 1 to 6, wherein in the phenolic polymer the OH content is 5 to 13 wt.%, in particular 6 to 9 wt.% based on the mass of the phenolic polymer.

8. The epoxy system of claims 1 to 7, wherein the phenolic polymer has a softening point according to ASTM 3461 up to 170 °C, more preferred 40°C to 120°C, more preferred 50°C to 100°C, and/or a Gardner color number, determined according to DIN EN ISO 4630:2016-05 using acetone instead of toluene for the measurement from 0 to 5, preferably from 0 to 2, more preferably from 0 to 1.

9. The epoxy system of claims 1 to 8, wherein the epoxy system comprises a hardener comprising amine, anhydride, phenolic, and/or thiol, in particular amine, functionalities.

10. Use of a phenolic polymer having a number average molar mass (Mₙ) of from 200 to 1,500 g/mol, determined as indicated in the specification, comprising a phenol compound, a linker group L and end group E, said phenolic polymer having the structure as presented in formula 1 below: 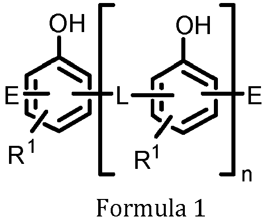
wherein the linker group L has the meaning of 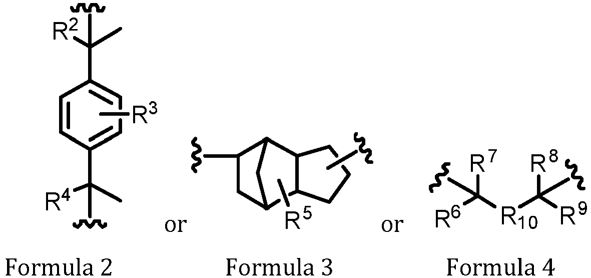 or 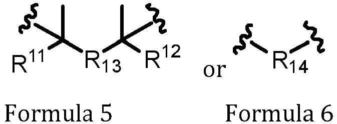
each end group E is a group of formula 2, 3, 4, 5 or 6 with only one bond to a phenol compound in formula 1 or has the meaning of 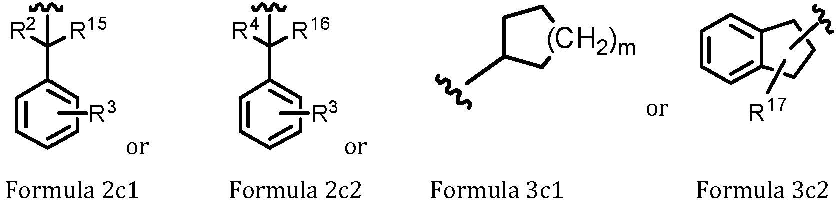
and wherein
R¹ is H, C₁₋₁₅ alkyl, or C₁₋₁₅ oxyalkyl, or C₆H₅(CR¹⁸R¹⁹)ₒ-Z-, preferably H, C₁₋₁₅ alkyl, or C₁₋₁₅ oxyalkyl,
R², R⁴, R⁶, R⁷, R⁸, R⁹, R¹¹ and R¹² are independently from each other H or C₁₋₅ alkyl,
R³ and R⁵ are H, OH, NO₂, halogen, C₁₋₅ alkyl or C₁₋₅ oxyalkyl,
R₁₀ and R₁₃ are C₁₋₅ alkyl or C₅₋₆ cycloalkyl,
R₁₄ is C₅₋₁₂ cycloalkyl, optionally substituted with a methyl or an ethyl group,
R¹⁵, R¹⁶, and R¹⁷ are independently from each other H or C₁₋₅ alkyl, preferably -CH₃,
R¹⁸ and R¹⁹ are independently of each other H or CH₃
Z is a covalent bond or -0-,
o is 1 or 0,
m is an integer from 1 to 7 and
n is an integer of from 2 to 21
as an accelerator for the curing of epoxy resins, in particular in the presence of a hardener comprising amine functionalities
or
as a hardener for epoxy resins, in particular in the presence of a co-hardener comprising amine functionalities.

11. Use according to claim 10, wherein the phenolic polymer is further **characterized by** at least one of the features defined in any one of claims 2 to 8.

12. Kit-of-parts comprising an epoxy resin and
a phenolic polymer having a number average molar mass (Mₙ) of from 200 to 1,500 g/mol, determined as indicated in the specification, comprising a phenol compound, a linker group L and end group E, said phenolic polymer having the structure as presented in formula 1 below: 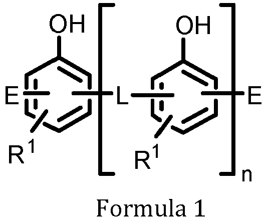
wherein the linker group L has the meaning of 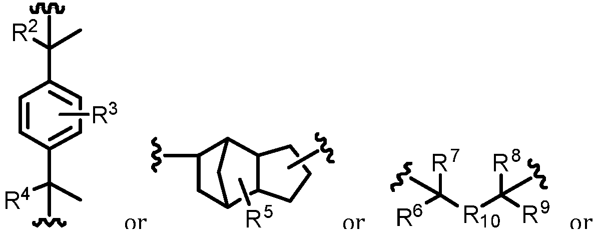 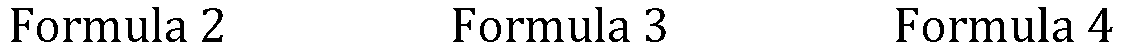 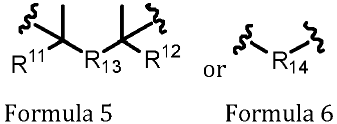
each end group E is a group of formula 2, 3, 4, 5 or 6 with only one bond to a phenol compound in formula 1 or has the meaning of 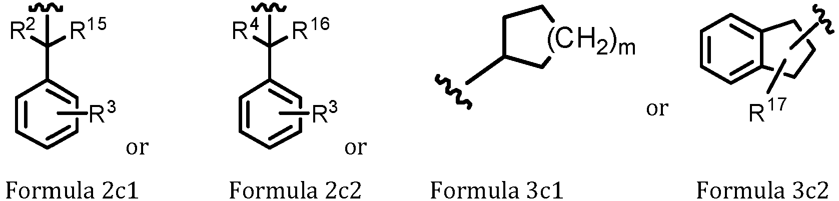
and wherein
R¹ is H, C₁₋₁₅ alkyl, or C₁₋₁₅ oxyalkyl, or C₆H₅(CR¹⁸R¹⁹)ₒ-Z-, preferably H, C₁₋₁₅ alkyl, or C₁₋₁₅ oxyalkyl,
R², R⁴, R⁶, R⁷, R⁸, R⁹, R¹¹ and R¹² are independently from each other H or C₁₋₅ alkyl,
R³ and R⁵ are H, OH, NO₂, halogen, C₁₋₅ alkyl or C₁₋₅ oxyalkyl,
R₁₀ and R₁₃ are C₁₋₅ alkyl or C₅₋₆ cycloalkyl,
R₁₄ is C₅₋₁₂ cycloalkyl, optionally substituted with a methyl or an ethyl group,
R¹⁵, R¹⁶, and R¹⁷ are independently from each other H or C₁₋₅ alkyl, preferably -CH₃,
R¹⁸ and R¹⁹ are independently of each other H or CH₃
Z is a covalent bond or -O-,
o is 1 or 0,
m is an integer from 1 to 7 and
n is an integer of from 2 to 21, and
a hardener comprising amine, anhydride, phenolic, and/or thiol, in particular amine, functionalities.

13. Kit-of-parts according to claim 12, wherein the phenolic polymer and the hardener are present as a mixture that optionally contains a solvent and/or a thinner.

## Patentansprüche

1. Ein Epoxidsystem, umfassend
- ein Epoxidharz und
- ein phenolisches Polymer mit einem Zahlenmittel der Molmasse (Mₙ) von 200 bis 1500 g/mol, ermittelt wie in der Beschreibung angegeben, das
eine Phenolverbindung, eine Verbindungsgruppe L und eine Endgruppe E umfasst, wobei dieses phenolische Polymer die Strukturformel wie nachstehend mit der Formel 1: 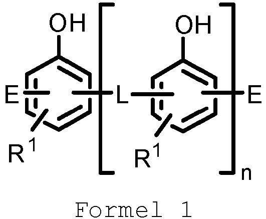 gezeigt, besitzt, wobei die Verbindungsgruppe L die Bedeutung: 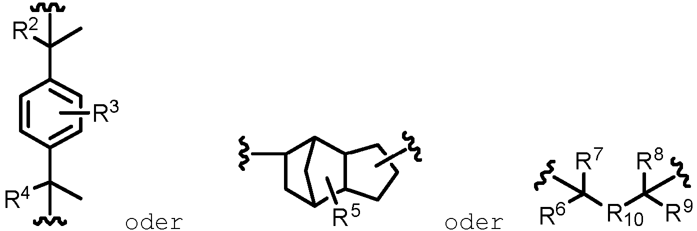 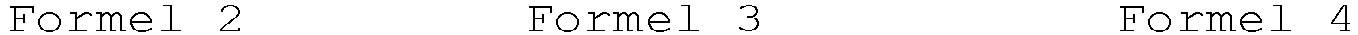 oder 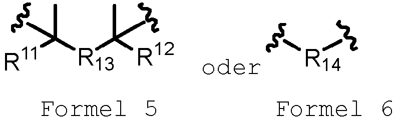 besitzt, wobei jede Endgruppe E eine Gruppe mit der Formel 2, 3, 4, 5 oder 6 mit nur einer Bindung an eine Phenolverbindung in der Formel 1 bedeutet oder die Bedeutung: 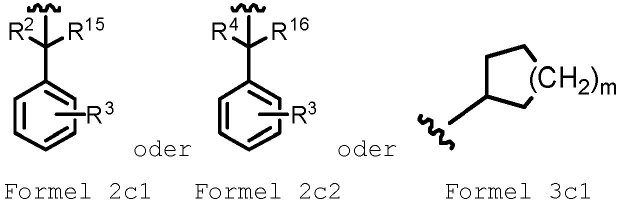 oder 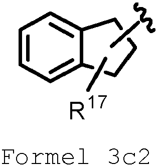 besitzt, und wobei:
- R¹ H, C₁₋₁₅-Alkyl oder C₁₋₁₅-Oxyalkyl oder
C₆H₅(CR¹⁸R¹⁹)ₒ-Z-, vorzugsweise H, C₁₋₁₅-Alkyl oder C₁₋₁₅-Oxyalkyl bedeutet,
- R², R⁴, R⁶, R⁷, R⁸, R⁹, R¹¹ und R¹² unabhängig voneinander H oder C₁₋₅-Alkyl bedeuten,
- R³ und R⁵ H, OH, NO₂, Halogen, C₁₋₅-Alkyl oder C₁₋₅-Oxyalkyl bedeuten,
- R₁₀ und R₁₃ C₁₋₅-Alkyl oder C₅₋₆-Cycloalkyl bedeuten,
- R₁₄ C₅₋₁₂-Cycloalkyl, das wahlweise mit einer Methyl- oder einer Ethylgruppe substituiert ist, bedeutet,
- R¹⁵, R¹⁶ und R¹⁷ unabhängig voneinander H oder C₁₋₅-Alkyl, vorzugsweise -CH₃ bedeuten,
- R¹⁸ und R¹⁹ unabhängig voneinander H oder CH₃ bedeuten,
- Z eine kovalente Bindung oder -O- bedeutet,
- o 1 oder 0 bedeutet,
- m eine ganze Zahl von 1 bis 7 und
- n eine ganze Zahl von 2 bis 21 bedeutet.

2. Das Epoxidsystem nach Anspruch 1, wobei das phenolische Polymer 50 Gew.-% bis 70 Gew.-% Phenolverbindung, 20 Gew.-% bis 50 Gew.-% Verbindungsgruppe L, insbesondere bifunktionelle Monomere, die aus einer Divinylbenzolverbindung, einer Dicyclopentadienverbindung oder einer Verbindung mit der Formel 4, 5 oder 6: 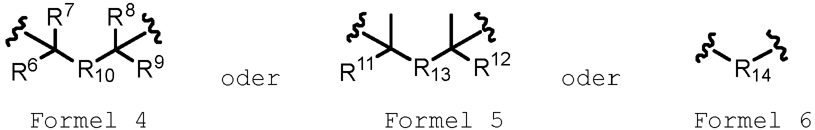 ausgewählt sind, wobei die Reste R⁶ bis R¹⁴ dieselbe Bedeutung wie weiter oben definiert besitzen, und/oder 0 Gew.-% bis 50 Gew.-%, insbesondere 5 Gew.-% bis 40 Gew.-%, und besonders bevorzugt 10 Gew.-% bis 40 Gew.-% Endgruppe E, insbesondere monofunktionelles Monomer mit nur einer Bindung an eine Phenolverbindung in dem phenolischen Polymer, bezogen auf die Masse des phenolischen Polymers, umfasst.

3. Das Epoxidsystem nach Anspruch 1 oder 2, wobei in dem phenolischen Polymer R¹ H, C₁₋₁₀-Alkyl, insbesondere C₁₋₈-Alkyl, besonders bevorzugt C₁₋₅-Alkyl, oder C₁₋₁₀-0xyalkyl, insbesondere C₁₋₈ Oxyalkyl, besonders bevorzugt C₁₋₅-Oxyalkyl bedeutet.

4. Das Epoxidsystem nach den Ansprüchen 1 bis 3, wobei in dem phenolischen Polymer die Verbindungsgruppe L die Bedeutung: 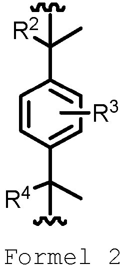 besitzt, wobei R², R³ und R⁴ wie in Anspruch 1 definiert sind und insbesondere H bedeuten.

5. Das Epoxidsystem nach den Ansprüchen 1 bis 4, wobei in dem phenolischen Polymer die Endgruppe E die Bedeutung: 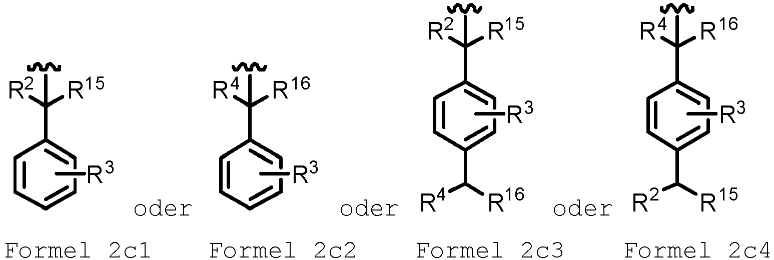 oder 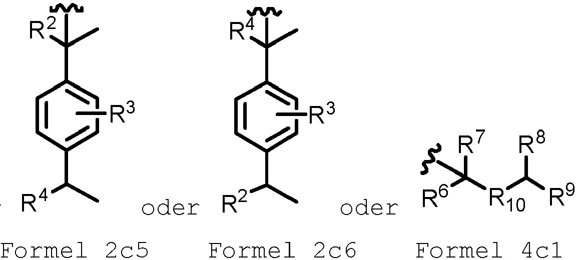 oder 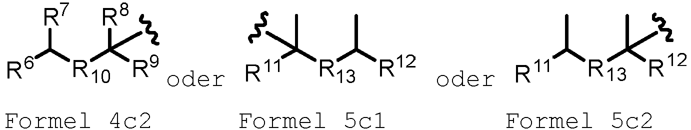 oder 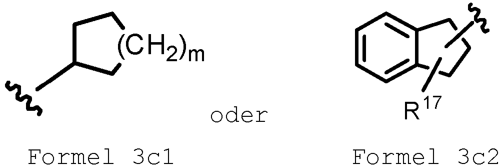 besitzt, wobei:
- R² bis R¹³ wie in Anspruch 1 definiert sind,
- m eine ganze Zahl von 1 bis 7 ist und
- R¹⁵, R¹⁶ und R¹⁷ unabhängig voneinander H oder C₁₋₅-Alkyl, vorzugsweise -CH₃ bedeuten.

6. Das Epoxidsystem nach den Ansprüchen 1 bis 5, wobei in dem phenolischen Polymer die Endgruppe E die Bedeutung: 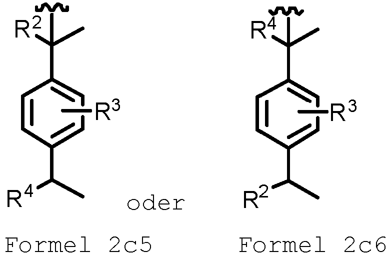 besitzt, worin R², R³ und R⁴ wie in Anspruch 1 definiert sind, insbesondere H bedeuten.

7. Das Epoxidsystem nach den Ansprüchen 1 bis 6, wobei in dem phenolischen Polymer der OH-Gehalt 5 bis 13 Gew.-%, insbesondere 6 bis 9 Gew.-%, bezogen auf die Masse des phenolischen Polymers, beträgt.

8. Das Epoxidsystem nach den Ansprüchen 1 bis 7, wobei das phenolische Polymer einen Erweichungspunkt entsprechend ASTM 3461 von bis zu 170 °C, besonders bevorzugt von 40°C bis 120°C, und noch mehr bevorzugt von 50 °C bis 100°C und/oder eine Gardner-Farbzahl, bestimmt entsprechend DIN EN ISO 4630:
2016-05 unter Verwendung von Aceton anstelle von Toluol für die Messung, von 0 bis 5, vorzugsweise von 0 bis 2, und besonders bevorzugt von 0 bis 1 besitzt.

9. Das Epoxidsystem nach den Ansprüchen 1 bis 8, wobei das Epoxidsystem einen Härter umfasst, der Amin-, Anhydrid-, phenolische und/oder Thiol- und insbesondere Amin-Funktionalitäten umfasst.

10. Verwendung eines phenolischen Polymers mit einem Zahlenmittel der Molmasse (Mₙ) von 200 bis 1500 g/mol, ermittelt wie in der Beschreibung angegeben, welches eine Phenolverbindung, eine Verbindungsgruppe L und eine Endgruppe E umfasst, wobei dieses phenolische Polymer die Strukturformel wie nachstehend mit der Formel 1: 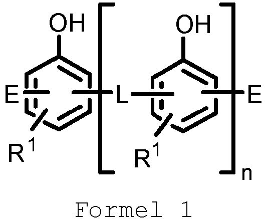 gezeigt, besitzt, wobei die Verbindungsgruppe L die Bedeutung: 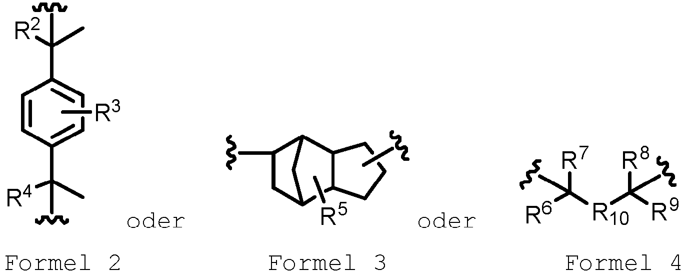 oder 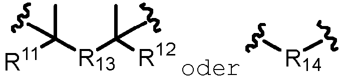 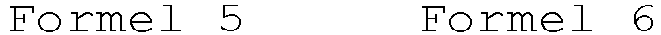 besitzt, wobei jede Endgruppe E eine Gruppe mit der Formel 2, 3, 4, 5 oder 6 mit nur einer Bindung an eine Phenolverbindung in der Formel 1 ist oder die Bedeutung: 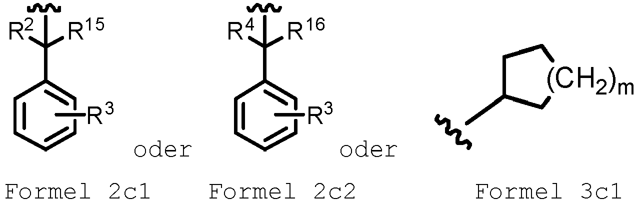 oder 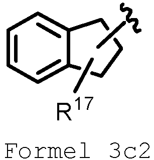 besitzt, und wobei:
- R¹ H, C₁₋₁₅-Alkyl oder C₁₋₁₅-Oxyalkyl oder C₆H₅(CR¹⁸R¹⁹)ₒ-Z-, vorzugsweise H, C₁₋₁₅-Alkyl, oder C₁₋₁₅-Oxyalkyl bedeutet,
- R², R⁴, R⁶, R⁷, R⁸, R⁹, R¹¹ und R¹² unabhängig voneinander H oder C₁₋₅-Alkyl bedeuten,
- R³ und R⁵ H, OH, NO₂, Halogen, C₁₋₅-Alkyl oder C₁₋₅-Oxyalkyl bedeuten,
- R₁₀ und R₁₃ C₁₋₅-Alkyl oder C₅₋₆-Cycloalkyl bedeuten,
- R₁₄ C₅₋₁₂-Cycloalkyl, das wahlweise durch eine Methyl- oder Ethylgruppe substituiert ist, bedeutet,
- R¹⁵, R¹⁶ und R¹⁷ unabhängig voneinander H oder C₁₋₅-Alkyl, vorzugsweise -CH₃, bedeuten,
- R¹⁸ und R¹⁹ unabhängig voneinander H oder CH₃ bedeuten,
- Z eine kovalente Bindung oder -O- bedeutet,
- o 1 oder 0 bedeutet,
- m eine ganze Zahl von 1 bis 7 bedeutet und
- n eine ganze Zahl von 2 bis 21 bedeutet, als ein Beschleuniger des Aushärtens von Epoxidharzen, insbesondere in Anwesenheit eines Härters, der Aminfunktionalitäten umfasst,
oder
als ein Härter für Epoxidharze, insbesondere in Anwesenheit eines Co-Härters, der Aminfunktionalitäten umfasst.

11. Verwendung nach Anspruch 10, wobei das phenolische Polymer ferner durch mindestens eines der in einem der Ansprüche 2 bis 8 definierten Merkmale gekennzeichnet ist.

12. Komponentensatz, umfassend
- ein Epoxidharz und
- ein phenolisches Polymer mit einem Zahlenmittel der Molmasse (Mₙ) von 200 bis 1500 g/mol, ermittelt wie in der Beschreibung angegeben, das eine Phenolverbindung, eine Verbindungsgruppe L und eine Endgruppe E umfasst, wobei dieses phenolische Polymer die Strukturformel wie nachstehend mit der Formel 1: 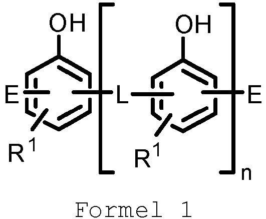 gezeigt, besitzt, wobei die Verbindungsgruppe L die Bedeutung: 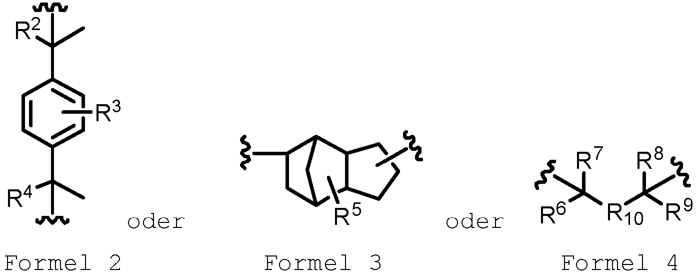 oder 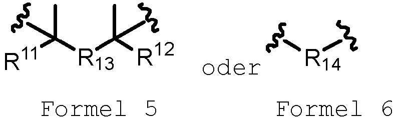 besitzt, wobei jede Endgruppe E eine Gruppe mit der Formel 2, 3, 4, 5 oder 6 mit nur einer Bindung an eine Phenolverbindung in der Formel 1 bedeutet oder die Bedeutung: 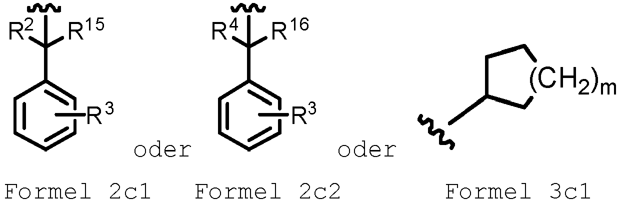 oder 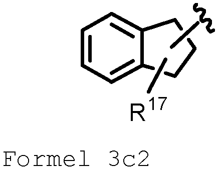 besitzt, und wobei:
- R¹ H, C₁₋₁₅-Alkyl oder C₁₋₁₅-Oxyalkyl oder C₆H₅(CR¹⁸R¹⁹)ₒ-Z-, vorzugsweise H, C₁₋₁₅-Alkyl oder C₁₋₁₅-Oxyalkyl bedeutet,
- R², R⁴, R⁶, R⁷, R⁸, R⁹, R¹¹ und R¹² unabhängig voneinander H oder C₁₋₅-Alkyl bedeuten,
- R³ und R⁵ H, OH, NO₂, Halogen, C₁₋₅-Alkyl oder C₁₋₅-Oxyalkyl bedeuten,
- R₁₀ und R₁₃ C₁₋₅-Alkyl oder C₅₋₆-Cycloalkyl bedeuten,
- R₁₄ C₅₋₁₂-Cycloalkyl, das wahlweise mit einer Methyl- oder Ethylgruppe substituiert ist, bedeutet,
- R¹⁵, R¹⁶ und R¹⁷ unabhängig voneinander H oder C₁₋₅-Alkyl und vorzugsweise -CH₃ bedeuten,
- R¹⁸ und R¹⁹ unabhängig voneinander H oder CH₃ bedeuten,
- Z eine kovalente Bindung oder -O- bedeutet,
- o 1 oder 0 bedeutet,
- m eine ganze Zahl von 1 bis 7 bedeutet und
- n eine ganze Zahl von 2 bis 21 bedeutet, und
- einen Härter, der Amin-, Anhydrid-, phenolische und/oder Thiol-, insbesondere Amin-Funktionalitäten umfasst.

13. Komponentensatz nach Anspruch 12, wobei das phenolische Polymer und der Härter als ein Gemisch vorliegen, das wahlweise ein Lösungsmittel und/oder ein Verdünnungsmittel enthält.

## Revendications

1. Système époxy comprenant
une résine époxy et
un polymère phénolique ayant une masse molaire moyenne en nombre (Mₙ) allant de 200 à 1 500 g/mol, déterminée comme indiqué dans la spécification,
comprenant un composé phénol, un groupe de liaison L et un groupe terminal E, ledit polymère phénolique ayant la structure telle que présentée dans la formule 1 ci-après : 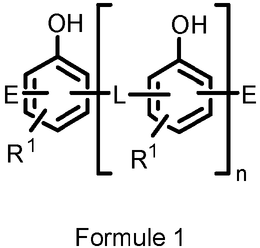
dans lequel le groupe de liaison L a la signification de 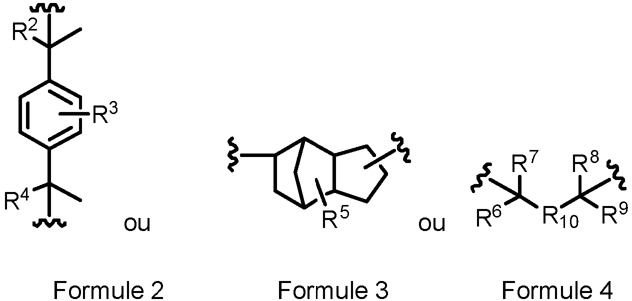 ou 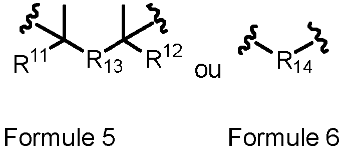
chaque groupe terminal E est un groupe de formule 2, 3, 4, 5 ou 6 avec une seule liaison à un composé phénol dans la formule 1 ou a la signification de 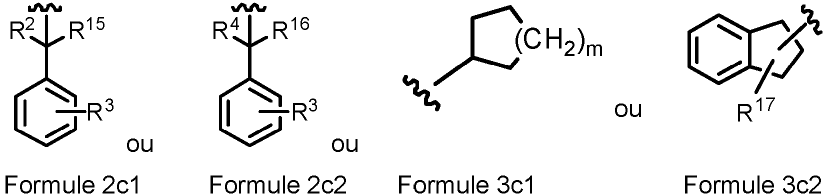
et dans lequel
R¹ est H, alkyle en C₁₋₁₅, ou oxyalkyle en C₁₋₁₅, ou C₆H₅(CR¹⁸ R¹⁹)ₒ-Z-, de préférence H, alkyle en C₁₋₁₅, ou oxyalkyle en C₁₋₁₅,
R², R⁴, R⁶, R⁷, R⁸, R⁹, R¹¹ et R¹² sont indépendamment les uns des autres H ou alkyle en C₁₋₅,
R³ et R⁵ sont H, OH, NO₂, halogène, alkyle en C₁₋₅ ou oxyalkyle en C₁₋₅,
R₁₀ et R₁₃ sont alkyle en C₁₋₅ ou cycloalkyle en C₅₋₆,
R₁₄ est cycloalkyle en C₅₋₁₂, facultativement substitué par un groupe méthyle ou éthyle,
R¹⁵, R¹⁶, et R¹⁷ sont indépendamment les uns des autres H ou alkyle en C₁₋₅, de préférence -CH₃,
R¹⁸ et R¹⁹ sont indépendamment l'un de l'autre H ou CH₃
Z est une liaison covalente ou -O-,
o vaut 1 ou 0,
m est un nombre entier allant de 1 à 7 et
n est un nombre entier allant de 2 à 21.

2. Système époxy selon la revendication 1, dans lequel ledit polymère phénolique comprend 50 % en poids à 70 % en poids de composé phénol, 20 % en poids à 50 % en poids du groupe de liaison L, en particulier de monomères difonctionnels choisis parmi un composé divinylbenzène, un composé dicyclopentadiène ou un composé de formule 4, 5 ou 6, 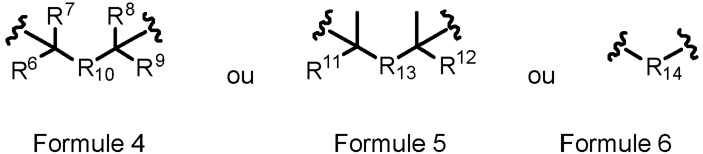
dans lequel les résidus R⁶ à R¹⁴ ont la même signification que celle définie précédemment,
et/ou 0 % en poids à 50 % en poids, en particulier 5 % en poids à 40 % en poids, plus particulièrement 10 % en poids à 40 % en poids, du groupe terminal E, en particulier d'un monomère monofonctionnel n'ayant qu'une seule liaison à un composé phénol dans le polymère phénolique, sur la base de la masse du polymère phénolique.

3. Système époxy selon les revendications 1 ou 2, dans lequel, dans le polymère phénolique, R¹ est H, alkyle en C₁₋₁₀, en particulier alkyle en C₁₋₈, plus particulièrement alkyle en C₁₋₅, ou oxyalkyle en C₁₋₁₀, en particulier oxyalkyle en C₁₋₈, plus particulièrement oxyalkyle en C₁₋₅.

4. Système époxy selon les revendications 1 à 3, dans lequel, dans le polymère phénolique, le groupe de liaison L a la signification de 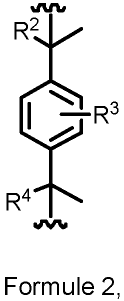 dans lequel R², R³ et R⁴ sont tels que définis dans la revendication 1, en particulier H.

5. Système époxy selon les revendications 1 à 4, dans lequel, dans le polymère phénolique, le groupe terminal E a la signification de 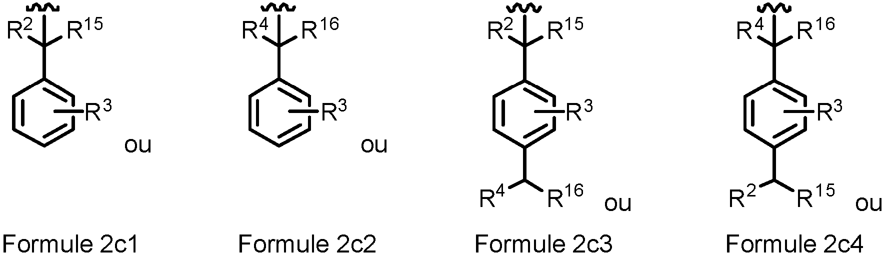 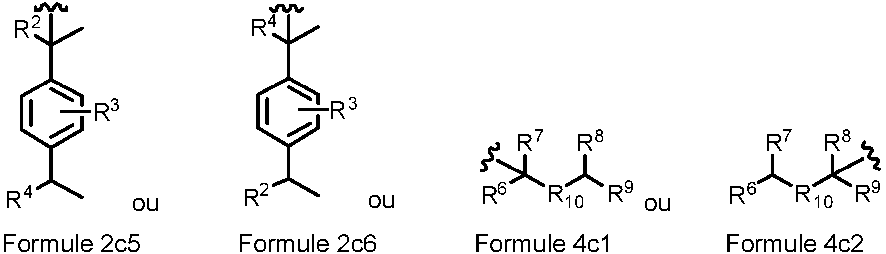 ou 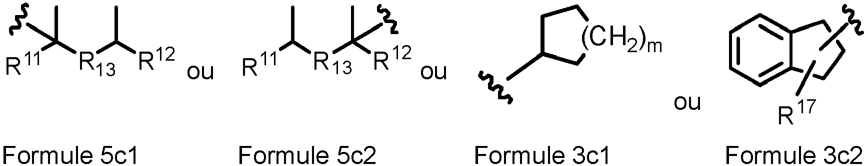
dans lequel R² à R¹³ sont tels que définis dans la revendication 1
m est un nombre entier allant de 1 à 7 et
R¹⁵, R¹⁶, et R¹⁷ sont indépendamment les uns des autres H ou alkyle en C₁₋₅, de préférence -CH₃.

6. Système époxy selon les revendications 1 à 5, dans lequel, dans le polymère phénolique, le groupe terminal E a la signification de 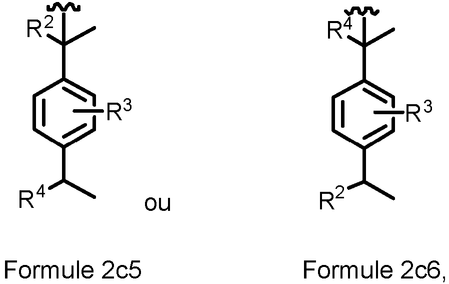 dans lequel R², R³ et R⁴ sont tels que définis dans la revendication 1, en particulier H.

7. Système époxy selon les revendications 1 à 6, dans lequel, dans le polymère phénolique, la teneur en OH est de 5 à 13 % en poids, en particulier 6 à 9 % en poids, sur la base de la masse du polymère phénolique.

8. Système époxy selon les revendications 1 à 7, dans lequel le polymère phénolique a un point de ramollissement selon la norme ASTM 3461 allant jusqu'à 170 °C, plus préférablement de 40 °C à 120 °C, plus préférablement de 50 °C à 100 °C, et/ou un indice de coloration Gardner, déterminé selon la norme DIN EN ISO 4630:2016-05 à l'aide d'acétone à la place du toluène pour la mesure de 0 à 5, de préférence de 0 à 2, plus préférablement de 0 à 1.

9. Système époxy selon les revendications 1 à 8, dans lequel le système époxy comprend un durcisseur comprenant des fonctionnalités amine, anhydride, phénolique, et/ou thiol, en particulier amine.

10. Utilisation d'un polymère phénolique ayant une masse molaire moyenne en nombre (Mₙ) allant de 200 à 1 500 g/mol, déterminée comme indiqué dans la spécification, comprenant un composé phénol, un groupe de liaison L et un groupe terminal E, ledit polymère phénolique ayant la structure telle que présentée dans la formule 1 ci-après : 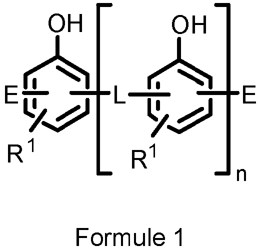
dans laquelle le groupe de liaison L a la signification de 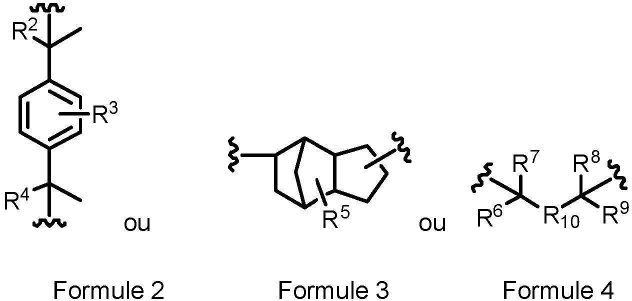 ou 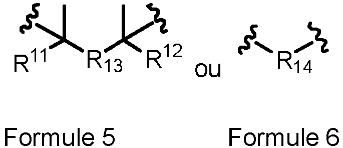
chaque groupe terminal E est un groupe de formule 2, 3, 4, 5 ou 6 avec une seule liaison à un composé phénol dans la formule 1 ou a la signification de 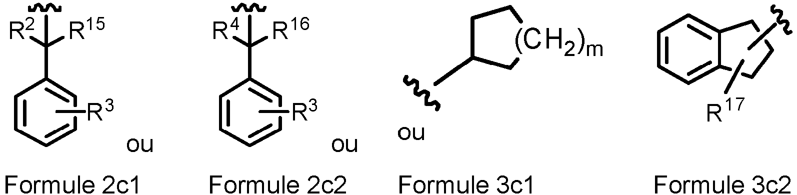
et dans laquelle
R¹ est H, alkyle en C₁₋₁₅, ou oxyalkyle en C₁₋₁₅, ou C₆H₅(CR¹⁸R¹⁹)ₒ-Z-, de préférence H, alkyle en C₁₋₁₅, ou oxyalkyle en C₁₋₁₅,
R², R⁴, R⁶, R⁷, R⁸, R⁹, R¹¹ et R¹² sont indépendamment les uns des autres H ou alkyle en C₁₋₅,
R³ et R⁵ sont H, OH, NO₂, halogène, alkyle en C₁₋₅ ou oxyalkyle en C₁₋₅,
R₁₀ et R₁₃ sont alkyle en C₁₋₅ ou cycloalkyle en C₅₋₆,
R₁₄ est cycloalkyle en C₅₋₁₂, facultativement substitué par un groupe méthyle ou éthyle,
R¹⁵, R¹⁶, et R¹⁷ sont indépendamment les uns des autres H ou alkyle en C₁₋₅, de préférence -CH₃,
R¹⁸ et R¹⁹ sont indépendamment l'un de l'autre H ou CH₃
Z est une liaison covalente ou -O-,
o vaut 1 ou 0,
m est un nombre entier allant de 1 à 7 et
n est un nombre entier allant de 2 à 21
en tant qu'accélérateur pour le durcissement de résines époxy, en particulier en présence d'un durcisseur comprenant des fonctionnalités amine
ou
en tant que durcisseur de résines époxy, en particulier en présence d'un co-durcisseur comprenant des fonctionnalités amine.

11. Utilisation selon la revendication 10, dans laquelle le polymère phénolique est en outre **caractérisé par** au moins une des caractéristiques définies dans l'une quelconque des revendications 2 à 8.

12. Trousse de pièces comprenant une résine époxy et
un polymère phénolique ayant une masse molaire moyenne en nombre (Mₙ) allant de 200 à 1 500 g/mol, déterminée comme indiqué dans la spécification, comprenant un composé phénol, un groupe de liaison L et un groupe terminal E, ledit polymère phénolique ayant la structure telle que présentée dans la formule 1 ci-après : 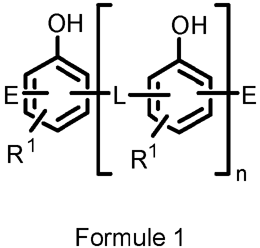
dans laquelle le groupe de liaison L a la signification de 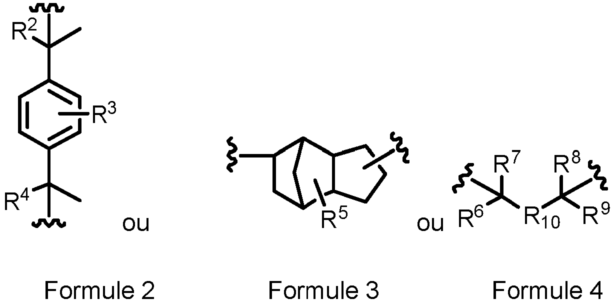 ou 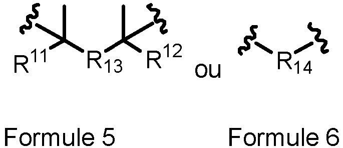
chaque groupe terminal E est un groupe de formule 2, 3, 4, 5 ou 6 avec une seule liaison à un composé phénol dans la formule 1 ou a la signification de 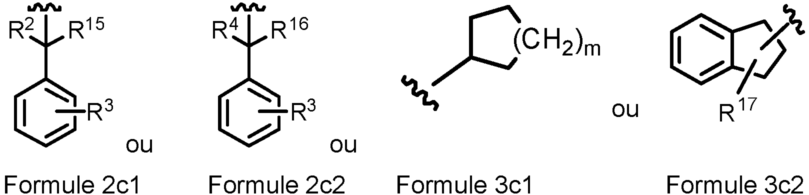
et dans laquelle
R¹ est H, alkyle en C₁₋₁₅, ou oxyalkyle en C₁₋₁₅, ou C₆H₅(CR¹⁸R¹⁹)ₒ-Z-, de préférence H, alkyle en C₁₋₁₅, ou oxyalkyle en C₁₋₁₅,
R², R⁴, R⁶, R⁷, R⁸, R⁹, R¹¹ et R¹² sont indépendamment les uns des autres H ou alkyle en C₁₋₅,
R³ et R⁵ sont H, OH, NO₂, halogène, alkyle en C₁₋₅ ou oxyalkyle en C₁₋₅,
R₁₀ et R₁₃ sont alkyle en C₁₋₅ ou cycloalkyle en C₅₋₆,
R₁₄ est cycloalkyle en C₅₋₁₂, facultativement substitué par un groupe méthyle ou éthyle,
R¹⁵, R¹⁶, et R¹⁷ sont indépendamment les uns des autres H ou alkyle en C₁₋₅, de préférence -CH₃,
R¹⁸ et R¹⁹ sont indépendamment l'un de l'autre H ou CH₃
Z est une liaison covalente ou -O-,
o vaut 1 ou 0,
m est un nombre entier allant de 1 à 7 et
n est un nombre entier allant de 2 à 21, et
un durcisseur comprenant des fonctionnalités amine, anhydride, phénolique, et/ou thiol, en particulier amine.

13. Trousse de pièces selon la revendication 12, dans laquelle le polymère phénolique et le durcisseur sont présents en tant que mélange qui contient facultativement un solvant et/ou un diluant.
